# EUROPÄISCHE PATENTANMELDUNG

(11) **EP 4 538 776 A1**
(43) Veröffentlichungstag der Anmeldung: **16.04.2025**
(21) Anmeldenummer: 24205134.0
(22) Anmeldetag: 08.10.2024
(51) Int. Cl.: G02B 27/10, H04N 23/45, H04N 23/55

(54) **STRAHLTEILERSYSTEM FÜR DIE FILMINDUSTRIE**

(30) Priorität: 10.10.2023 DE 102023127582
(71) Anmelder: SCREEN PLANE GmbH, 81549 München (DE)
(72) Erfinder: CRAMER, Sebastian, 81549 München (DE)
(74) Vertreter: Lambacher, Michael

(57) **Zusammenfassung**

Das Strahlteilersystem (1) besteht aus einem Aufnahmeobjektiv (3), wenigstens zwei Kameras (12, 12') sowie einer Relaiseinheit (2) mit wenigstens einem Strahlteilerelement (7), einer ersten Relaisoptik (6) und wenigstens zwei zweiten Relaisoptiken (8, 8a). Dabei stellt das Aufnahmeobjektiv (3) ein reelles Luftbild (4) zur Verfügung, das durch die erste Relaisoptik (6) abgebildet wird, wobei das wenigstens eine Strahlteilerelement (7) den Abbildungsstrahlengang (9) der ersten Relaisoptik (6) in wenigstens zwei Abbildungspfade (10,10a) aufteilt, und die wenigstens zwei zweiten Relaisoptiken (8, 8a) in den wenigstens zwei zweiten Abbildungspfaden (10, 10a) das Luftbild (4) jeweils auf einen Sensor (11, 11a) der wenigstens zwei Kameras (12, 12a) abbilden, wobei die Brennweite der ersten Relaisoptik (6) sich von den Brennweiten der wenigstens zwei zweiten Relaisoptiken (8, 8a) nicht um mehr als 10% unterscheidet und das Strahlteilersystem (1) ferner eine Einrichtung umfasst, die dazu ausgebildet ist, das abzubildende Bild (4) in wenigstens einem der wenigstens zwei Abbildungspfade (10, 10a) wahlweise zu modifizieren.

## Beschreibung

### TECHNISCHES GEBIET

Die Erfindung betrifft ein Strahlteilersystem für die Filmindustrie. Insbesondere betrifft die Erfindung ein Strahlteilersystem mit den Merkmalen des Anspruchs 1.

### STAND DER TECHNIK

In der Medienindustrie wird es zunehmend wichtig, von ein und demselben Filmprojekt Auswertungen mit unterschiedlichen Parametern zu schaffen. Dies kann zum einen die Bildrate betreffen, also die Anzahl an Bildern, die pro Sekunde aufgenommen werden, aber auch das Seitenverhältnis eines Filmes, um nur zwei Beispiele zu nennen.

So weisen Kinofilme eine Bildrate von 24 Bildern pro Sekunde auf, während Fernsehproduktionen in Europa mit 25 Bildern/s laufen und in den USA 30 Bilder/s üblich sind. Für das Internet werden meist Bildraten von 60 Bildern/s verwendet. Eine Anpassung dieser unterschiedlichen Bildraten erfolgt für gewöhnlich durch eine periodische Wiederholung von Bildern ausgehend von einer einzigen Laufbildsequenz, durch eine digitale Interpolation oder durch die Veränderung der Abspielgeschwindigkeit. Derartige Umwandlungen sind allerdings oft mit störenden Qualitätsverlusten verbunden oder können, wie im Fall der Interpolation, sehr aufwendig sein.

Herkömmliche Filme weisen zudem meist eine horizontale Orientierung auf, d.h. die waagerechte Kante des Bildfensters ist länger als die vertikale. Übliche Seitenverhältnisse sind hierbei oft 16:9, 4:3 oder 2,4:1. Für Social Media Auswertungen werden vorwiegend vertikale Bildseitenverhältnisse gefordert, oft in einem Seitenverhältnis von 9:16.

Um dieses geforderte Seitenverhältnis umzusetzen, wird meist ein vertikaler Bildausschnitt aus dem horizontalen Aufnahmebild bestimmt und seitlich entsprechend beschnitten. Der

Nachteil hierbei ist, dass für eine vertikale Orientierung ein erheblicher Beschnitt notwendig ist. Zudem wird durch einen reinen Bildbeschnitt auf 9:16 oft ein Ausschnitt vorgegeben, der zu eng ist, um eine Szene verständlich wiederzugeben. Vorteilhaft ist es daher, wenn das vertikale Bildseitenverhältnis nicht nur aus einem Teilbereich des Ursprungbildes mit horizontaler Orientierung gebildet wird, sondern selbst eine Bildhöhe aufweisen kann, die grösser ist, als die Bildhöhe des horizontal orientierten Ausgangsbildes.

Eine naheliegende Lösung wäre es, zwei Kameras mit identischen Aufnahmeobjektiven neben einander zu platzieren, wobei eine um 90° um die optische Achse verdreht ist und hierdurch zwei Aufnahmen mit den geforderten Parametern zu schaffen oder die nebeneinander positionierten Kameras mit unterschiedlichen Bildraten laufen zu lassen, wenn eine Auswertung mit unterschiedlichen Bildraten gefordert ist. Ein Nachteil hierbei ist jedoch, dass professionelle Filmkameras meist eine Breite von 15 cm oder mehr aufweisen und der so verursachte seitliche Versatz zu groß ist. So würde dies beispielsweise bedeuten, dass ein Darsteller bei einer Nahaufnahme in die Linse einer Kamera blickt, während er bei der anderen Kamera seitlich vorbeischaut.

Aktuell werden derartige Anforderungen, insbesondere wenn unterschiedliche Bildraten oder unterschiedliche Belichtungszeiten gefordert sind, oft mit stereoskopischen Spiegelrigs umgesetzt, bei der zwei Kameras mit identischen Objektiven verwendet werden, wobei eine Kamera in einen halbdurchlässigen Teilerspiegel filmt und die andere durch diesen hindurch. Durch die Verwendung eines Strahlteilerspiegels und die Einstellmöglichkeiten eines solchen Rigs, insbesondere der Möglichkeit, den seitlichen Versatz der beiden Kameras zu bestimmen, ist es möglich, diesen Versatz vollständig bis auf null zu reduzieren und mit beiden Kameras zwei völlig identische Bilder aufzunehmen. Werden nun an einer der beiden Kameras die Bildrate, die Belichtungszeit, das Seitenverhältnis oder andere Parameter geändert, lassen sich Aufnahmen mit den oben aufgeführten Anforderungen realisieren. Allerdings sind stereoskopische Spiegelrigs aufwendig in der Bedienung, benötigen Fachpersonal, sind kostspielig in der Anschaffung und beinhalten eine Vielzahl möglicher Fehlerquellen.

Für einen Kameramann ist die Wahl der verwendeten Aufnahmeobjektive mit ihrer jeweiligen Charakteristik eine wichtige Entscheidung, ebenso die Wahl einer Aufnahmekamera. Beide Komponenten bestimmen den "Look" eines Filmprojektes. Ebenso gibt es eine Vorstellung darüber, mit welcher Brennweite sich bestimmte Bildwinkel und Kompositionen erreichen lassen. Für den Kameramann ist es daher von großer Bedeutung, dass bei der Schaffung von unterschiedlichen Bildvarianten mit dem bekannten und vertrauten Equipment gearbeitet werden kann. Dies umfasst das Aufnahmeobjektiv, die Aufnahmekamera, aber auch die Bildwinkel, die sich für eine bestimmte Brennweite bei einer gegebenen Sensorgröße ergeben.

Aus der WO 01/86348 A1 ist eine Multiplexkamera bekannt, welche mittels Relaisoptiken und Strahlteilern einen Abbildungsstrahl teilt und an bis zu vier Kameras leitet. Die Kameras laufen synchronisiert zueinander, um dann aus den einzelnen Aufnahmen neue Bildsequenzen zu erzeugen, welche vorwiegend durch das Ineinanderflechten der Einzelbilder derjeweiligen Kameras generiert werden. In der Praxis ist es jedoch oft nötig, neben der hier vorgestellten Bildrate, Belichtungszeit und Fokus deutlich mehr Parameter sehr differenziert einzustellen, um die heutzutage gewünschten Aufnahmevarianten zu erhalten.

In der US 5 900 942 A wird ein multispektrales Bild-System vorgestellt, mit dem sich multispektrale Aufnahmevarianten von einer Szene erstellen lassen. Hierbei wird eine Zwischenabbildung mittels Relaisoptiken, Strahlenteilern und Filtern so aufgeteilt, dass den Sensoren unterschiedlicher Kameras verschiedene Spektralbereiche desselben Ausgangsbildes zur Verfügung gestellt werden.

Die DE 10 2012 005 939 A1 erreicht unterschiedliche Abbildungsvarianten durch ein Strahlteilerelement, welches in den Strahlengang eines Zoomobjektives eingebracht ist und das Licht an zwei Sensoren weiterleitet, insbesondere um unterschiedliche Polarisationsvarianten der beiden Aufnahmen zu erreichen. Eine derartige Ausführung arbeitet ohne Zwischenabbildung und ermöglicht nicht die Verwendung von Wechselobjektiven.

In der US 8 320 047 B2 wird ein System vorgestellt, welches den Strahl eines Objektives auf mehrere Bildsensoren in unterschiedlicher Lichtstärke aufteilt.

Der Erfindung liegt daher die Aufgabe zugrunde, ein einfach zu bedienendes System zu schaffen, welches wenigstens zwei unabhängigen Kameras bzw. Kamerasensoren den Bildkreis von einer Szene mit identischem Blickpunkt zur Verfügung stellt, wobei wenigstens eines der auf den wenigstens zwei Sensoren abzubildenden Bilder modifiziert wird und die Charakteristik eines Aufnahmeobjektives in Bezug auf die Brennweite und den "Look" erhält.

Gelöst wird diese Aufgabe durch das Strahlteilersystem gemäß dem Anspruch 1, das dazu konzipiert ist, auf den Sensoren von wenigstens zwei Kameras jeweils ein Bild bzw. eine Bildsequenz (Filmsequenz) einer Szene mit identischem Blickpunkt abzubilden und dabei die auf den Sensoren der wenigstens zwei Kameras abzubildenden Bilder wahlweise zueinander zu modifizieren. Die Bildmodifikation kann hierbei direkt in den Abbildungspfaden des Strahlteilersystems erfolgen oder durch Einstellung oder Positionierung der wenigstens zwei Kameras zueinander erreicht werden.

Vorteilhafte Weiterbildungen der Erfindung sind Gegenstand der Ansprüche 2 bis 20. Insbesondere zeichnet sich das erfindungsgemäße Strahlteilersystem im Vergleich zu anderen Systemen, insbesondere den oben diskutierten stereoskopischen Spiegelrigs, durch eine einfachere Konstruktion und Bedienung aus.

### ALLGEMEINE BESCHEIBUNG

### Genereller Aufbau

Gängige Aufnahmeobjektive können aus der emittierten oder reflektierten Strahlung einer Szene neben einer direkten Abbildung auf einen bildgebenden Sensor auch ein reelles Luftbild erzeugen. Wird ein solches Aufnahmeobjektiv von der Kamera am Objektivmount getrennt, so lässt sich zwischen Aufnahmeobjektiv und Kamera im Abbildungsstrahlengang eine Relaiseinheit einfügen, welche das Luftbild auf den Sensor einer Kamera abbildet. Hierbei kann das Aufnahmeobjektiv, welches das Luftbild erzeugt, sowohl ein Festbrennweitenobjektiv, als auch ein Zoomobjektiv sein. Eine Relaiseinheit wird häufig zweiteilig, bestehend aus einer ersten Relaisoptik und einer zweiten Relaisoptik ausgeführt. Oft ist eine solche zweiteilige Ausführung so ausgelegt, dass die erste Relaisoptik das Luftbild im Wesentlichen nach Unendlich abbildet.

Das erfindungsgemäße Strahlteilersystem umfasst eine Relaiseinheit mit einer ersten Relaisoptik und wenigstens zwei zweiten Relaisoptiken. Ferner weist das Strahlteilersystem lichteintrittsseitig ein Aufnahmeobjektiv auf, das an die Relaiseinheit mittels ihres Objektivmounts montiert ist. Es stellt im Abbildungsstrahlengang ein reelles Luftbild zur Verfügung, welches durch die erste Relaisoptik positiv gebrochen wird oder nach Unendlich abgebildet wird und durch ein Strahlteilerelement in zwei Abbildungspfade aufgeteilt wird, die jeweils aus der Transmission und der Reflektion des Abbildungsstrahlenganges gebildet werden. Ein derartiges Strahlteilerelement kann als Teilerplatte, Teilerprisma oder Teilerwürfel ausgeführt sein. Teilerverhältnis und Teilerverhalten des Strahlteilerelements zwischen Transmission und Reflektion werden nachfolgend noch weiter beschrieben.

Durch eine zweite Relaisoptik, welche im ersten Abbildungspfad der transmittierten Strahlung positioniert ist, wird das Luftbild auf den Sensor der ersten Kamera abgebildet. Durch eine weitere zweite Relaisoptik, welche im reflektierten, zweiten Abbildungspfad positioniert ist, wird das Luftbild auf den Sensor der zweiten Kamera abgebildet. Hierbei sind die Kameras über ihren Kameramount ebenfalls trennbar (lösbar) an die Relaiseinheit montiert.

Die Relaiseinheit kann hierbei vorteilhaft als eigene Baugruppe in einem eigenen Gehäuse ausgeführt sein, an welches das Aufnahmeobjektiv und die beiden Kameras lösbar montiert (angeflanscht) werden können. In diesem Fall umfasst die Relaiseinheit einen kameraseitigen Mount zur Befestigung des Aufnahmeobjektives, ferner die erste Relaisoptik, das Strahlteilerelement, je Abbildungspfad eine zweite Relaisoptik und jeweils einen objektivseitigen Mount zur Aufnahme einer Kamera. Als Kamera ist hierbei eine Einheit definiert, die einen eigenen Sensor aufweist und Bilder durch die Umwandlung einer Lichtstrahlung in elektrische Signale erzeugt, welche in der Einheit verarbeitet werden und intern oder extern aufgezeichnet werden. Eine solche Kamera weist einen kameraseitigen Mount zur Befestigung von Aufnahmeobjektiven auf, wobei die Aufnahmeobjektive nicht Bestandteil der Kamera sind.

Mittels der erfindungsgemäßen Relaiseinheit lassen sich zwei identische Bildkreise eines Luftbildes auf den jeweiligen Sensoren der beiden Kameras abbilden. Wird nun durch eine weitere Einrichtung in der Relaiseinheit oder durch weitere Einstellungen in der Relaiseinheit oder an wenigstens einer der beiden Kameras eine Modifikation an wenigstens einem der auf die Sensoren der beiden Kameras abzubildenden Bilder vorgenommen, so lassen sich zwei Varianten einer Laufbildsequenz erzeugen. Diese möglichen Modifikationen werden im Folgenden genauer erläutert.

Die Relaiseinheit bildet mit dem lösbar befestigbaren (anflanschbaren) Aufnahmeobjektiv und den lösbar befestigbaren (anflanschbaren) Kameras ein vollständiges Strahlteilersystem. Hierbei ist die Relaiseinheit die zentrale Einheit, in der auch der Schwerpunkt des kompletten Strahlteilersystems liegt. Daher ist es sinnvoll, dass die Relaiseinheit Anschlussvorrichtungen für ein Kamerastativ oder andere Kameratragevorrichtungen an ihrer Unterseite oder den Außenseiten aufweist. Dies können insbesondere Schraubgewinde sein. An diese lassen sich Verschiebeplatten zu Balancierung eines kompletten Strahlteilersystems montieren.

Die Relaiseinheit weist neben dem beschriebenen Lichtein- und Lichtaustritt vorteilhaft ein lichtundurchlässiges, vollständig geschlossenes Gehäuse auf, um den Eintritt von Streulicht zu verhindern.

Es ist auch möglich, im parallelen Strahlengang weitere Strahlteilerelemente zu platzieren, welche das Licht in weitere Abbildungspfade aufteilen, welche mittels weiterer zweiter Relaisoptiken auf die Sensoren weiterer Kameras abgebildet werden. Dies ist dann sinnvoll, wenn mehr als zwei Aufnahmen mit jeweils unterschiedlichen Einstellungen oder Modifikationen gewünscht sind.

Auf die Möglichkeit derartiger Weiterbildungen mit mehr als einem Strahlteilerelement und mehr als zwei Abbildungspfaden wird ausdrücklich hingewiesen. Im Folgenden werden jedoch der Einfachheit halber die möglichen Ausführungen und Weiterbildungen anhand von Strahlteilersystemen mit lediglich zwei Abbildungspfaden und zwei Kameras erläutert.

### Relaisoptiken

Die erste Relaisoptik und die wenigstens zwei zweiten Relaisoptiken des erfindungsmäßigen Strahlteilersystems weisen, unter der Voraussetzung eines im Wesentlichen parallelen Strahlenganges zwischen den beiden Optiken, vorteilhaft eine gleiche oder nahezu gleiche Brennweite auf. Hierdurch wird erreicht, dass die abgebildete Bildgröße an den jeweiligen Sensoren der beiden Kameras der Größe des Luftbildes entspricht.

Es kann auch sinnvoll sein, die Brennweite der wenigstens zwei zweiten Relaisoptiken geringfügig größer zu bestimmen, als die der ersten Relaisoptik, um beispielsweise Vignettierungen oder Randunschärfen durch die Relaisübertragung zu vermeiden oder zu reduzieren. Das abgebildete Bild an den jeweiligen Sensoren ist dadurch geringfügig größer, als das Luftbild. Hierfür ist die Brennweite der zweiten Relaisoptiken in einem Bereich von 0 bis 10% grösser zu wählen, als die Brennweite der ersten Relaisoptik, um den grundsätzlichen Charakter der Brennweite des Aufnahmeobjektives zu erhalten.

Es ist aber auch möglich, dass die Brennweiten der ersten Relaisoptik und der zweiten Relaisoptiken deutlich unterschiedlich sind, um beispielsweise den Bildkreis es Aufnahmeobjektives an die Sensorgröße der Kameras anzupassen. Hierbei können auch die Brennweiten der beiden zweiten Relaisoptiken beider Abbildungspfade unterschiedlich ausgelegt werden, beispielsweise, wenn die Sensorgrößen der beiden Kameras zueinander unterschiedlich sind und angepasst werden sollen oder wenn an einer Kamera ein vergrößerter Bildausschnitt gewünscht ist.

In der Filmindustrie ist ein Aufnahmeobjektiv häufig so ausgelegt, dass es das Bildfenster einer Filmkamera oder einen Sensor einer Kamera mit der Größe von Super 35 mm in der Abbildung ausfüllen kann. Dieses Aufnahmeformat hat eine definierte Größe von 24,89 x 18,66 mm und resultiert aus der bei Filmkameras maximal nutzbaren Fläche der einzelnen Bildfelder, welche im Abstand von vier Perforationslöchern in vertikaler Bildorientierung angeordnet sind. Ein Aufnahmeobjektiv, welches das Format Super 35 voll abbilden kann, weist somit einen Bildkreis von mindestens 31,1 mm, bzw. von 32 mm auf. Da Super 35 Aufnahmeobjektive ein weit verbreiteter Standard sind, ist es vorteilhaft, wenn die Relaiseinheit mit der ersten Relaisoptik und den zwei zweiten Relaisoptiken ebenfalls einen Bildkreis von mindestens 31,1 mm, bzw. 32 mm auf den jeweiligen Sensoren abbilden kann. Vorteilhaft sollte die Übertragung noch etwas größer sein, beispielsweise mit einem Bildkreisdurchmesser von 34-35 mm um Raum zu schaffen, einen Sensorausschnitt mit einer Größe von Super 35 geringfügig in horizontaler und/oder vertikaler Richtung zu verschieben, um beispielsweise die beiden Aufnahmen deckungsgleich zu einander auszurichten.

In einer vorteilhaften Ausführungsform kann wenigstens eine der zweiten Relaisoptiken auswechselbar in einem der Abbildungspfade montiert sein, um die Verwendung einer längeren Brennweite für diese zweite Relaisoptik zu ermöglichen und die Abbildung dieses Abbildungspfades zu vergrößern. Denkbar ist auch die Verwendung eines Zoomobjektives als zweite Relaisoptik in wenigstens einem der beiden Abbildungspfade.

Die erste Relaisoptik ist auf die Schärfenebene des Luftbildes fokussiert. Diese Fokuseinstellung kann starr oder einstellbar ausgeführt sein. Eine Abstimmung als starre Ausführung lässt sich beispielsweise durch enge Fertigungstoleranzen oder durch Shims erreichen. Eine variable Einstellung lässt sich mittels einer Schnecke, eines Feingewindes, einer Innenfokussierung oder eines floating Elements umsetzen. Da hierbei in erster Linie das Auflagemaß der ersten Relaisoptik eingestellt wird, ist eine Fokussiereinrichtung mit einem kleinen Einstellbereich von einigen Zehntel mm meist ausreichend.

Die Fokussierung der wenigstens zwei zweiten Relaisoptiken, auf die Sensorebene der jeweiligen Kameras, kann starr oder einstellbar ausgeführt sein. Eine Abstimmung als starre Ausführung lässt sich beispielsweise durch enge Fertigungstoleranzen oder durch Shims erreichen. Vorteilhaft ist hierbei eine variable Einstellmöglichkeit mittels einer Fokussiereinrichtung. Dies kann mittels einer Schnecke, einer Innenfokussierung oder eines floating Elements erfolgen. Da hierbei in erster Linie das Auflagemaß der zweiten Relaisoptiken eingestellt wird, ist eine Fokussiereinrichtung mit einem sehr kleinen Einstellbereich von einigen Zehntel mm meist ausreichend. Dies lässt sich beispielsweise mittels eines Feingewindes am Linsenstock der jeweiligen zweiten Relaisoptik realisieren, welches mittels eines axial geführten Einstellringes die axiale Verschiebung des Linsenstockes bestimmt. Vorteilhaft ist eine solche Einstellung selbsthemmend oder fixierbar ausgeführt, damit sich das Auflagemaß der zweiten Relaisoptiken während der Aufnahme oder des Transportes des Systems nicht verstellt.

Die hier beschriebenen Fokussiermöglichkeiten dienen in erster Linie dazu, die erste Relaisoptik und die zweiten Relaisoptiken in den jeweiligen Abbildungspfaden zueinander, zu den Sensorebenen der Kameras und zum Aufnahmeobjektiv abzustimmen.

Durch eine verstellbare Fokussierungseinrichtung von wenigstens einer der beiden zweiten Relaisoptiken können beispielsweise Fertigungstoleranzen hinsichtlich des Auflagemaßes der Kameras zueinander angepasst und kompensiert werden. Ein weiterer Vorteil einer einstellbaren Fokussierung der zweiten Relaisoptiken ergibt sich, wenn die Kameras das Licht in unterschiedlichen Spektralbereichen aufzeichnen, insbesondere wenn eine der Kameras das sichtbare Licht aufnimmt, während die andere den Spektralbereich von Infrarot oder NahInfrarot aufzeichnet. Durch das unterschiedliche Brechungsverhalten verschiedener Spektralbereiche ist es vorteilhaft, wenn die Fokussierung zumindest einer der beiden zweiten Relaisoptiken individuell an die Fokussierung des anderen Abbildungspfades angepasst werden kann. Idealerweise weisen beide zweiten Relaisoptiken eine solche Fokussiereinrichtung auf, da so beide Kameras vollständig und unabhängig voneinander abgestimmt werden können. Eine weitere Anwendung ist das gezielte Einstellen einer leicht unterschiedlichen Schärfenebene der Abbildung auf der Sensorebene an einer der zweiten Relaisoptiken, um beispielsweise die Schärfentiefe zu erhöhen. Wird der Fokus an einer der zweiten Relaisoptiken geringfügig verstellt, so nimmt diese Kamera eine geringfügig andere Schärfenebene auf, als die andere Kamera. Dabei lässt sich der Abstand dieser beiden Schärfenebenen so bestimmen, dass sich die Schärfentiefenbereiche beider Aufnahmen jeweils noch minimal überlagern. Es gibt somit Bildbereiche, welche von einer Kamera mit höchstmöglicher Schärfe abgebildet werden, die an Bildbereiche grenzen, welche von der anderen Kamera mit höchstmöglicher Schärfe abgebildet werden.

In der Fotografie ist zur Erhöhung der Schärfentiefe ein sogenanntes Focus-Stacking-Verfahren hinlänglich bekannt. Hierbei werden aus mehreren Bildern, die nacheinander mit einer jeweils leicht verschobenen Schärfenebenen aufgenommen werden, die jeweils schärfsten Bildteile zu einem neuen Bild mit einer erhöhter Schärfentiefe zusammengefügt.

Ein solchen Verfahren lässt sich mittels des erfindungsgemäßen Strahlteilersystems ebenso für Laufbildfolgen verwenden. Durch das elektronische Selektieren und Zusammenfügen der jeweils schärfsten Bildbereiche eines jeden Einzelbildes der beiden Abbildungsvarianten wird eine neue Bildsequenz mit einer erhöhten Schärfentiefe geschaffen.

Hinsichtlich der Lichtstärke der Relaiseinheit ist zu beachten, dass die maximal übertragbare Blendenöffnung sowohl durch die Lichtstärke des Aufnahmeobjektivs, wie auch durch die Lichtstärke der ersten Relaisoptik und der zweiten Relaisoptiken bestimmt wird. Die maximale Lichtstärke des Gesamtsystems kann nur so groß sein, wie die maximale Lichtstärke der am wenigsten lichtstarken Komponente. Weist beispielsweise die Relaiseinheit, bestehend aus einer ersten Relaisoptik und wenigstens zwei zweiten Relaisoptiken als größte Öffnung eine Blende 4 auf und das Aufnahmeobjektiv eine Blende 1.4, so beträgt die maximal übertragbare Öffnung eine Blende 4, auch wenn am Aufnahmeobjektiv eine größere Blendenöffnung als eine Blende 4 eingestellt ist. Wird am Aufnahmeobjektiv die Blende im Bereich von 1.4 und 4 verändert, so ist keine Veränderung des Bildes festzustellen, insbesondere verändert sich die Schärfentiefe und das Bokeh nicht. Es wird in diesem Fall immer die Schärfentiefe gezeigt, die einer Blende 4 entspricht. Veränderungen der Schärfentiefe werden erst sichtbar, wenn am Aufnahmeobjektiv ein Blendenwert größer als 4 eingestellt wird.

Daher ist es von Vorteil, wenn die Relaiseinheit selbst eine möglichst große Lichtstärke aufweist, beispielsweise eine Blende 2, da andernfalls die an dem Strahlteilersystem montierten Aufnahmeobjektive in ihrer maximalen Lichtstärke stark beschränkt sind und Aufnahmen mit geringer Schärfentiefe nicht mehr möglich sind, da sie vom Strahlteilersystem nicht übertragen werden.

Die Einstellung der gewünschten Blende einer Aufnahme wird vorzugsweise am Aufnahmeobjektiv vorgenommen. Dies ist von Vorteil, weil beide Abbildungspfade so dieselbe Blendeneinstellung und somit dieselbe Schärfentiefe aufweisen. Da das Aufnahmeobjektiv einem Kameramann vertraut ist, kann er die Blendeneinstellung wie gewohnt vornehmen.

Es ist allerdings ebenso denkbar, dass die Blendeneinstellung an der ersten Relaisoptik vorgenommen wird. Auch hier würde die gewählte Blende für beide Abbildungspfade gleich sein. Auch eine Änderung der Blendeneinstellung an der jeweiligen zweiten Relaisoptik ist möglich, führt aber dazu, dass die Schärfentiefe bei unterschiedlich gewählten Blenden in der Abbildung beider Kameras nicht mehr gleich ist.

Es lässt sich somit festhalten, dass die Bestimmung der Blende an einem oder mehreren der folgenden Optiken vorgenommen werden kann: am Aufnahmeobjektiv, an der ersten Relaisoptik und/oder an den wenigstens zwei zweiten Relaisoptiken, auch wenn es in den meisten Fällen vorteilhaft ist, die Blende am Aufnahmeobjektiv einzustellen.

### Filterungen zur Anpassung der Belichtung

Die eigentliche Belichtungszeit von Laufbildkameras kann als absoluter Wert oder als relativer Wert, abhängig von der Bildrate festgelegt sein und kann maximal den Wert von Sekunde/Bildrate betragen. Bei klassischen Filmkameras wird die Belichtungszeit von einer Umlaufblende bestimmt, welche meistens einen Sektorwinkel von 180° aufweist. Daher beträgt auch bei einer digitalen Laufbildkameras häufig die Belichtungszeit die Hälfte der maximalen Belichtungszeit, was zum Beispiel bei 24 Bildern pro Sekunde einer Zeit von 1/48 s entspricht. Sind beide Kameras auf eine relative Belichtungszeit eingestellt, so ist die jeweilige Belichtungszeit abhängig von der Bildrate.

Beispielsweise beträgt die Belichtungszeit bei einem 180° Shutter bei 24 fps (frames per second) 1/48 s und bei 60 fps 1/120 s. Somit trifft auf den Sensor der mit 24 fps laufenden Kamera während eines Belichtungsvorganges deutlich mehr Licht und zwar um den Faktor 2,5, was in etwa 1,3 Blenden entspricht. Weisen die Sensoren die gleiche Empfindlichkeit auf, und hat der Strahlteiler ein Verhältnis von 50:50 zwischen Transmission und Reflektion, so muss die Lichtintensität der beiden Abbildungspfade zueinander angepasst werden.

Um diesen Unterschied in der Belichtungszeit auszugleichen, ist es vorteilhaft, wenn die Lichtintensität mittels eines Graufilters angepasst wird, welcher nach der Strahlteilung in den Abbildungspfad der mit 24 fps laufenden Kamera eingesetzt wird. Graufilter verändern lediglich die Lichtintensität, aber nicht den Charakter eines Lichtstrahls und sind häufig in Drittel-Blendenstufen, teilweise aber auch nur in vollen Blendenstufen verfügbar. In beiden Fällen wird zur Anpassung der Lichtintensität der Graufilter verwendet, welcher am nächsten am rechnerischen Wert der geforderten Lichtreduktion ist. Im oben aufgeführten Beispiel ist dies - wenn nur volle Blendenstufen verfügbar sind - ein Graufilter mit einer Reduktion von einer Blendenstufe.

Geringe Blendenunterschiede von weniger als einer Blende lassen sich in der Postproduktion bei der sogenannten Lichtbestimmung vollständig auskorrigieren. Somit weisen nun beide Kameras eine korrekte und weitgehend angepasste Belichtung auf und liefern zwei ansonsten identische Aufnahmen, eine mit einer Bildrate von 24 fps und die andere von 60 fps.

Anstelle der Verwendung eines Graufilters ist es ebenso möglich, zur Modifikation der Lichtintensität der Abbildungspfade ein Strahlteilerelement zu verwenden, welches beispielsweise ein Teilungsverhältnis von 66,6:33,3 aufweist und dem Pfad der mit 60 fps laufenden Kamera die doppelte Lichtintensität zuweist. Auch in diesem Fall würde die Belichtung um eine volle Blendenstufe zu der des anderen Pfades angepasst werden, was in der Lichtbestimmung der Aufnahme vollständig ausgleichbar ist.

Ebenso ist es möglich, die Belichtungszeit der mit 24 fps laufenden Kamera auf die Belichtungszeit der mit 60 fps laufenden Kamera anzugleichen, sodass beide Sensoren jeweils je Einzelbild gleich lang belichten. Hierbei ist allerdings die relative Bewegungsunschärfe der beiden Aufnahmen nicht mehr gleich zueinander. Somit würde die mit 24 fps laufende Kamera einen weniger ruhigen Bildlauf aufweisen, der "stroboskobartiger" wirken kann. Dies kann möglicherweise kreativ so gewünscht sein, andernfalls empfiehlt sich eine Anpassung der Belichtung mittels Graufiltern und/oder dem Teilungsverhältnis des Strahlteilerelements.

Eine Kompensation der Belichtung durch Abblenden der zweiten Relaisoptik der mit 24 fps laufenden Kamera um eine volle Blende oder genauer, um 1,2 Blendenstufen, ist deshalb nicht sinnvoll, da sich hierdurch die Schärfentiefe dieses Abbildungspfades ändert und somit nicht mehr identisch zum zweiten Abbildungspfad ist. Gegebenenfalls kann dies kreativ so gewünscht sein, sollte aber andernfalls vermieden werden.

### Verwendung sonstiger Filter

Zum Erreichen von unterschiedlichen Abbildungsvarianten einer Szene lässt sich neben Graufiltern eine Vielzahl von unterschiedlichen Filtern zur Modifikation eines oder beider Abbildungspfade verwenden. Dies können beispielsweise auch Filter sein, die bestimmte Bereiche des sichtbaren oder nicht sichtbaren Lichtspektrums sperren, insbesondere solche, die ausschließlich den Bereich von Infrarot bzw. Nahinfrarot sperren oder nur diesen Spektralbereich durchlassen, was im Folgenden näher erläutert wird.

Denkbar ist auch die Verwendung von Effektfiltern, wie zum Beispiel Sternfiltern oder Streakfiltern, welche in hellen, punktförmigen Bildbereichen eine Sternabbildung oder einen Streifen erzeugen. Ebenso kann wenigstens einer der Abbildungspfade mittels Weichzeichnungsfiltern, Low-Contrast-Filtern, Farbeffektfiltern oder von Verlaufsfiltern modifiziert werden. Ein weiterer Anwendungsbereich einer Filterung lässt sich durch die Verwendung von Polarisationsfiltern erreichen, insbesondere zur Erstellung von kreuzpolarisierten Aufnahmen, welche im Folgenden genauer erläutert wird.

Vorteilhaft lassen sich hierfür Filter eines jeden Abbildungspfades zwischen dem Strahlteilerelement und der zweiten Relaisoptik platzieren. Ist die erste Relaisoptik so ausgeführt, dass sie das Luftbild im Wesentlichen nach Unendlich abbildet, hat die Stärke des Filterglases keinen Einfluss auf die Abbildung. Ebenso ist es aber auch möglich, einen Filter im Abbildungspfad zwischen der jeweiligen zweiten Relaisoptik und dem Sensor zu positionieren oder diesen in die zweite Relaisoptik zu integrieren.

Die Filter können beispielsweise Schraubfilter, Folienfilter, runde oder eckige Filterscheiben sein oder sonstige Ausführungsformen aufweisen. Hierbei sollte mindestens ein Abbildungspfad eine solche Filtermöglichkeit aufweisen, um eine Anpassung der Belichtung und/oder weitere Modifikationen zum anderen Abbildungspfad ermöglichen. Idealerweise weist jeder Abbildungspfad eine eigene, unabhängige Filtermöglichkeit auf.

Vorteilhaft sind die Filter austauschbar in einen Filterhalter einsetzbar und lassen sich in diesem fixieren, beispielsweise durch eine Klemmung oder einen Schraubring. Ein solcher Filterhalter kann beispielsweise als Filtereinschub ausgeführt sein, welcher in einer Führung gelagert ist, die senkrecht zur optischen Achse des Abbildungspfades ausgerichtet ist. Vorteilhaft lässt sich die Positionierung eines Filters mittels des Filterhalters durch eine Verschraubung, eine Rastung oder eine Klemmung in der Relaiseinheit so fixieren, dass der Filter während der Aufnahmen oder des Transportes sicher in seiner Position gehalten wird. Der Filterhalter ist vorteilhaft lichtdicht mit der Relaiseinheit verbunden, um einen ungewollten Lichteintritt zu verhindern.

Bei der Verwendung von Polarisationsfiltern, Streakfiltern, Sternfiltern oder Verlaufsfiltern sollte sich der Verdrehwinkel des Filters zentrisch um die optische Achse bestimmen lassen, da der Filter abhängig von dem eingestellten Verdrehwinkel unterschiedliche Ergebnisse liefert. Daher ist es vorteilhaft, wenn ein Kameramann den Verdrehwinkel von Filtern bei Aufnahmen selbst bestimmen und einstellen kann.

Dies wird dadurch erreicht, dass der Filterhalter mit einem Drehlager, vorzugsweise mit einem umlaufenden Lagerring montiert ist, welche eine Verdrehung und Fixierung des eingestellten Verdrehwinkels des Filters um die optische Achse ermöglicht. Vorteilhaft ist die Einstellung des Verdrehwinkels auch bei einem bereits eingesetzten Filterhalter bestimmbar. Dies lässt sich beispielsweise durch eine Übertragung der Filterdrehstellung mittels einer Verzahnung, einem Zahnriemen oder einem Reibrad erreichen. Die Fixierung der eingestellten Verdrehung kann selbsthemmend, durch eine Klemmung oder eine Arretierung erfolgen.

Wird ein bestimmter Filter in nur einen der beiden Abbildungspfade eingebracht, so lassen sich mit ansonsten identischen Aufnahmeeinstellungen Aufnahmevarianten realisieren, welche dann jeweils die Filtercharakteristik aufweisen, beziehungsweise in der filterlosen Variante diese nicht aufweisen. In der Postproduktion kann durch Mischung der beiden Aufnahmen ein beliebiger Zwischenwert der gefilterten und der ungefilterten Version bestimmt und entsprechend gerendert werden. Ebenso ist es möglich, einen dynamischen Übergang von der gefilterten Version zur ungefilterten Version oder umgekehrt mittels einer Überblendung zu erzeugen. Es wird somit dem Kameramann oder dem Regisseur die Möglichkeit gegeben, die Intensität einer Filterung oder den Zeitpunkt und die Dauer einer dynamischen Veränderung einer solchen Filterung nach der eigentlichen Aufnahme völlig frei, den kreativen Anforderungen entsprechend, zu bestimmen.

### Verwendung unterschiedlicher Strahlteiler

Die Bestimmung der Lichtintensität der wenigstens zwei Abbildungspfade kann neben der Verwendung von Graufiltern auch mittels des Teilungsverhältnisses des Strahlteilerelements festgelegt und modifiziert werden.

Eine naheliegende Möglichkeit ist es, das Strahlteilerelement als 50:50 Teilung auszulegen, wodurch zwei in ihrer Lichtintensität gleichwertige Abbildungspfade erzeugt werden. Wird für die jeweiligen Abbildungspfade eine unterschiedliche Lichtintensität gewünscht, weil beispielsweise die Belichtungszeiten unterschiedlich sind, so kann mittels des Teilungsverhältnisses des Strahlteilerelements die Zuweisung der Lichtmenge je Abbildungspfad modifiziert und festgelegt werden.

Bei einem Strahlteilerelement mit einer 50:50 Teilung beträgt der Lichtverlust je Abbildungspfad jeweils eine Blende, während er bei einer 75:25 Teilung für einen Abbildungspfad ca. 0,4 Blendenstufen und für den anderen Abbildungspfad zwei Blenden beträgt. Wird also ein Strahlteilerverhältnis gewählt, welches möglichst exakt die Unterschiede in der Belichtungseinstellungen der beiden Kameras wiedergibt, wird hierdurch eine größtmögliche Nutzung des vorhandenen Lichts gewährleistet, weil unterschiedliche Belichtungen nicht durch Graufilter kompensiert werden müssen.

Da dem Strahlteilerelement eine wichtige Rolle in der Kompensation von Belichtungsunterschieden zukommt, ist das Strahlteilerelement vorteilhaft so ausgelegt, dass es trennbar (lösbar) mit der Relaiseinheit verbunden ist und Varianten mit unterschiedlichen Teilungsverhältnissen oder Teilungseigenschaften eingesetzt und positionsgenau fixiert werden können. Vorteilhaft wird dies mittels einer Registrierung, welche formschlüssig in eine Aufnahme der Relaiseinheit eingreift, erreicht. Eine solche Aufnahme sollte sich in der Relaiseinheit fixieren lassen, beispielsweise durch eine Klemmung, eine Verschraubung oder Verriegelung. Die Strahlteilerhalterung ist vorteilhaft so ausgeführt, dass sie lichtdicht mit der Relaiseinheit zu verbinden ist, um einen ungewollten Lichteintritt zu verhindern.

Durch die Verwendung von Strahlteilerelementen mit angepassten Teilungsverhältnissen lassen sich sowohl Unterschiede in der Belichtungszeit, der Sensorempfindlichkeit, der Blendeneinstellung, einer unterschiedlichen Filterung oder in der Abbildung unterschiedlicher Spektralbereiche vollständig oder teilweise kompensieren.

Ebenso lassen sich die beiden Abbildungspfade auch mittels polarisierenden Strahlteilern modifizieren, bei welchen das Teilungsverhältnis durch den Polarisationswinkel des eintretenden Lichts bestimmt wird.

Ein weitere Möglichkeit der Modifikation der Abbildungspfade lässt sich mittels eines Strahlteilerelements erreichen, bei welchem die Teilungsverhältnisse durch die Wellenlänge des eintretenden Lichts bestimmt werden, insbesondere mit einer Grenzwellenlänge zwischen 700 und 780nm. Das eintretende Licht wird durch einen solchen Strahlteiler in sichtbares Licht und in infrarotes, bzw. nahinfrarotes Licht aufgeteilt. Voraussetzung für die Aufzeichnung von infrarotem Licht durch den Sensor der entsprechenden Kamera ist, dass diese keinen eigenen IR-Sperrfilter aufweist.

Unabhängig von dem Lichtverlust, der durch das Teilungsverhältnis zwischen Transmission und Reflektion am Strahlteilerelement gegeben ist, weist das System noch einen zusätzlichen geringen Lichtverlust auf, welcher durch Restreflektionen beim Durchgang des Lichtstrahles an Oberflächen mit unterschiedlichen Brechungsindexen und im Glas selbst entsteht. Da dieser sehr gering ausfällt, wird er hier nicht näher erläutert.

Zur Angleichung der Belichtung sind auch beliebige Kombinationen aus den oben aufgezeigten Modifikationsmöglichkeiten möglich. Sind beispielsweise deutliche Unterschiede beider Belichtungszeiten gewünscht, ist es sinnvoll, eine grobe Angleichung der Belichtung zunächst mittels eines geeigneten Teilungsverhältnisses des Strahlteilerelements zu erreichen, da hierdurch die jeweils maximale Lichtintensität an die Sensoren der Kameras geleitet wird. Eine Feinabstimmung lässt sich anschließend durch eine zusätzliche Verwendung von Graufiltern erreichen. Eine erste Vorbestimmung des Teilungsverhältnisses am Strahlteilerelement ist auch insofern sinnvoll, als Strahlteilungsplatten, Strahlteilungsprismen oder Strahlteilungswürfel oft nur mit wenigen Teilungsverhältnissen verfügbar sind und dadurch weniger fein abgestimmt werden können, als dies mit Graufiltern möglich ist.

Eine Angleichung der Belichtung mittels der Belichtungszeit des Sensors ist in den meisten Fällen nicht sinnvoll, da hierdurch die Charakteristik der Darstellung von bewegten Objekten sich insofern ändert, dass die Bewegungsunschärfe nicht mehr gleich dargestellt wird.

### Aufnahmen von Laufbildsequenzen in unterschiedlichen Spektralbereichen

Sensoren von digitalen Laufbildkameras sind für gewöhnlich so ausgelegt, dass sie für das Licht des sichtbaren Spektrums empfindlich sind, aber für andere Spektralbereiche insbesondere für Infrarotlicht und Nahinfrarotlicht unempfindlich sind. Dies wird meist durch einen Kurzpassfilter erreicht, der vor oder auf den Sensor montiert ist und Lichtstrahlung ab einer Grenzwellenlänge von etwa 780 nm nicht mehr durchlässt. Man spricht auch von einem IR-Sperrfilter, den die meisten Sensoren von digitalen Kameras aufweisen.

Zum Teil sind diese Filter mit dem Sensor fest verkittet, zum Teil sind sie aber auch entfernbar. Wird ein solcher Kurzpassfilter entfernt und durch einen komplementären Langpassfilter ersetzt, der das Licht erst ab einer Grenzwellenlänge von ca. 780 nm durchlässt, dann zeichnet eine solche Kamera ausschließlich Infrarotlicht, insbesondere Nahinfrarotlicht auf, während sichtbares Licht nicht mehr abgebildet wird. Eine gewisse Trennschärfe ist filterbedingt im Grenzbereich gegeben. Teilweise liegen die Grenzwellenlängen in der Fotografie und Film auch in einem Bereich bis zu 700 nm. Die vorgestellten Anwendungsbereiche gelten daher auch für Spektralbereiche, welche nicht genau bei 780 nm getrennt werden und in dem Bereich von 700 nm bis 780 nm liegen.

Werden nun die Abbildungspfade beider Kameras mit komplementären Lang- und Kurzpassfiltern einer Grenzwellenlänge von 700 nm bis 780 nm ausgestattet, lassen sich identische, deckungsgleiche Bilder einer Szene aufzeichnen, die sich dadurch unterscheiden, dass eine Kamera ausschließlich sichtbares Licht und die andere ausschließlich IR-Licht aufzeichnet.

Wird bei einer Kamera der meist vor oder auf dem Sensor montierte IR-Kurzpassfilter entfernt oder weist der Sensor keinen solchen Filter auf, so kann ein dann notwendiger Langpassfilter, welcher den Bereich des sichtbaren Lichts sperrt, an verschiedenen Stellen im Abbildungspfad des Infrarotpfades platziert werden. Zum einen kann dieser direkt vor dem Sensor positioniert werden, aber ebenso gut im Abbildungspfad zwischen dem Strahlteilerelement und der zweiten Relaisoptik angeordnet sein, insbesondere in dem dafür vorgesehenen Filterhalter.

Es wird somit neben den Farbkanälen Rot, Grün, Blau des sichtbaren Lichts ein deckungsgleicher zusätzlicher Infrarotkanal geschaffen und der Laufbildsequenz zugeordnet. Dieser kann zusätzliche Bildinformationen enthalten oder als zusätzlicher Hilfskanal beispielsweise Masken zur Trennung von Bildelementen, Markierungen oder Informationen über Tiefenstaffelungen einer Szene beinhalten.

Als ein Beispiel für die Gewinnung zusätzlicher Bildinformationen lässt sich anführen, dass in einer Infrarotaufnahme Blätter von Pflanzen beispielsweise nahezu weiß dargestellt werden, während ein blauer Himmel meist schwarz abgebildet wird. Mit einem solchen Effekt ist es beispielsweise möglich, sogenannte "Day for Night"-Szenen zu drehen. Hierbei wird bei Tageslicht eine Szene aufgenommen, die im fertigen Film eine Nachtszene darstellt. Durch die Abbildung eines schwarzen oder fast schwarzen Himmels einer Infrarotaufnahme sind derartige Bildwirkungen umsetzbar. Hierzu werden die Farbkanäle Rot, Grün und Blau der einen Kamera mit dem Infrarotkanal der anderen Kamera nach der Aufnahme digital zusammengeführt, bis die gewünschte Bildwirkung erreicht ist, insbesondere, um einem abgedunkelten Infrarotkanal, farbige Bildelemente zuzuführen.

Bei einer Weiterbildung sind dem Strahlteilersystem eine oder mehrere Lichtquellen zugeordnet, die so angepasst ist, dass sie entweder nur sichtbares Licht oder nur infrarotes, insbesondere nahinfrarotes Licht emittieren.

Insbesondere bei LEDs sind Lichtquellen bekannt, welche ausschließlich nahinfrarotes Licht emittieren. Wird ein Hintergrund einer Szene ausschließlich mit einer derartigen Lichtquelle beleuchtet, während ein Vordergrund ausschließlich mit sichtbarem Licht beleuchtet ist und ist durch die räumliche Distanz von Vordergrund und Hintergrund eine ausreichende Trennung gewährleistet, lassen sich mit Hilfe des Infrarotkanals Masken erzeugen, mit denen sich ein Vordergrundelement des mit sichtbarem Licht aufgenommenen Vordergrundes isolieren lässt. Dieses kann dann später beispielsweise mit einem anderen Hintergrundbild kombiniert werden, wobei das Bildsignal des Infrarotkanals als Maske verwendet wird.

Emittiert eine Lichtquelle sowohl sichtbares Licht, als auch Infrarotlicht, kann sie durch einen entsprechenden Kurzpassfilter oder Langpassfilter welcher im Lichtaustritt positioniert ist, so gefiltert werden, dass sie ausschließlich sichtbares Licht oder Infrarotlicht aussendet.

Eine weitere Anwendung lässt sich beispielsweise dadurch erreichen, dass ein Darsteller von einer weichen, diffusen Lichtquelle beleuchtet wird, welche ausschließlich Licht des sichtbaren Spektrums aussendet. Mit einer weiteren, aber punktförmigen und harten Lichtquelle, die den Darsteller ausschließlich im nahinfraroten Spektrum beleuchtet, lässt sich im Infrarot-Kanal eine Maske erzeugen, die einer Lichtverteilung von starkem Sonnenlicht entspricht. Wird nun das Bildsignal der weichen Darstellung des sichtbaren Lichts in zwei unterschiedliche Farbbestimmungen aufgespalten, wobei die eine einer dunkleren Schattendarstellung entspricht und die andere hellem, direkten Sonnenlicht, kann mit Hilfe der Maske des Infrarotkanals ein Mischbild erzeugt werden, welches den Darsteller in grellem Sonnenlicht mit entsprechenden Schattenwirkungen zeigt. Sowohl die Intensität, als auch der Zeitpunkt und die Dauer eines Übergangs eines solchen Lichteffektes lässt sich in der Postproduktion später genau bestimmen und bietet dem Kameramann oder dem Regisseur eine große Gestaltungsfreiheit zu einem späteren Zeitpunkt, als der eigentlichen Aufnahme.

In einer weiteren Weiterbildung der Erfindung ist die zugeordnete Lichtquelle ein Projektor, welcher Muster ausschließlich im infraroten Licht auf einen Darsteller oder eine Szene projiziert. Diese Muster können beispielsweise Schachbrettmuster, Linien oder unregelmäßige Strukturen sein, die ausschließlich auf dem Sensor der für Infrarotlicht empfindlichen Kamera abgebildet werden und auf die Aufnahme des sichtbaren Lichts der anderen Kamera keinen Einfluss haben. Diese Muster lassen sich über digitale Analyseverfahren dazu nutzen, um aus den Bildsignalen Tiefeninformationen einer Szene zu generieren. Es ist also möglich, mit Hilfe eines solchen Verfahrens zusätzlich zu der farblichen Darstellung einer Szene einen völlig unabhängigen Tiefenkanal zu generieren.

### Kreuzpolarisierte Fotografie

Eine weitere Weiterbildung des Strahlteilersystems wird durch die Zuordnung einer oder mehrerer Lichtquellen geschaffen, welche polarisiertes Licht aussenden und mit einer zusätzlichen polarisierten Filterung innerhalb des Strahlteilersystems kombiniert wird.

In der kreuzpolarisierten Fotografie wird ein Objekt oder ein Darsteller von einer oder mehrerer Lichtquellen beleuchtet, deren Strahlen mittels eines Polarisationsfilters in einer definierten Richtung polarisiert sind. Werden mehrere Lichtquellen verwendet, so weisen diese vorteilhaft eine identische Polarisationsorientierung auf. Vor dem Aufnahmeobjektiv einer Kamera ist ein zweiter Polarisationsfilter angeordnet, dessen Orientierung um 90° verdreht zur Polarisationsrichtung der Lichtquelle angeordnet ist. Hierdurch werden Reflexe von Glanzlichtern vollständig unterdrückt und es wird lediglich der diffuse Anteil des Lichts abgebildet. Es entsteht der Eindruck einer völlig matten Bildwirkung, die keinerlei Reflektionen einer Lichtquelle mehr aufweist und vollständig weich beleuchtet erscheint.

Mittels des erfindungsmäßigen Strahlteilersystems und zugeordneten polarisierten Lichtquellen lassen sich somit zwei ansonsten identische Aufnahmen einer Szene realisieren, wobei in einem Abbildungspfad ein kreuzpolarisiertes Bild aufgezeichnet wird und im anderen Abbildungspfad ein Bild mit Glanzlichtern. Erreicht wird dies, indem beispielsweise im ersten Abbildungspfad zwischen dem Strahlteilerelement und der zweiten Relaisoptik ein Polarisationsfilter angeordnet wird, welcher um 90° zur Polarisation der Lichtquelle verdreht ist. Im zweiten Abbildungspfad ist kein Polarisationsfilter platziert oder dieser Polarisationsfilter weist dieselbe Orientierung wie die Polarisation der Lichtquelle auf. Entsprechend werden die Glanzlichter in diesem Abbildungspfad nicht ausgelöscht, sondern mit abgebildet. Somit nimmt eine Kamera ein glanzlichtfreies, kreuzpolarisiertes mattes Bild auf, während die andere Kamera eine "normale" Bildwirkung mit Glanzlichtern aufzeichnet.

In der Computeranimation werden kreuzpolarisierte Aufnahmen von Darstellern als Texturen benötigt, die auf digitale Körper oder Objekte projiziert oder "gemappt" werden. Da sich die beiden Aufnahmen bei ansonsten gleichen Kameraeinstellungen lediglich dadurch unterscheiden, dass eine Variante Glanzlichter aufweist, während die andere diese nicht zeigt, können durch Subtraktion der beiden Aufnahmen die Glanzlichter isoliert werden und stehen somit als zusätzlicher Bildkanal für die Computeranimation ebenfalls zur Verfügung. Es werden somit eine kreuzpolarisierte Textur und ein Kanal mit Reflektionen und Glanzlichtern zur weiteren Verarbeitung bereitgestellt. Neben der Verwendung als Texturen in der Computeranimation lassen sich solche kreuzpolarisierten Aufnahmen auch als visuelle Effekte verwenden, da die Bildwirkung durch das Fehlen von Glanzlichtern einen eher unwirklichen und "unheimlichen" Charakter bekommt und gerade Gesichter oft "alienhaft" wirken.

Statt durch einen oder mehrere Polarisationsfilter können die Abbildungspfade auch mittels eines polarisierenden Strahlteilerelements modifiziert werden, bei welchem das Teilungsverhältnis durch den Polarisationswinkel des eintretenden Lichts bestimmt wird. Wie bereits erwähnt, lassen sich die Strahlteilerelemente vorteilhaft auswechseln und je nach Anwendung positionieren und fixieren.

### Registrierung und Justierung des Sensorausschnittes

Vorteilhaft sind sowohl das Aufnahmeobjektiv, als auch die Kameras trennbar (lösbar) an die Relaiseinheit montiert. Es wird so einem Kameramann ermöglicht, aus einer Vielzahl von Festbrennweiten oder Zoomobjektiven ein bestimmtes, von ihm präferiertes Aufnahmeobjektiv auszuwählen und auch die Brennweiten des Aufnahmeobjektivs frei bestimmen zu können.

Ebenso kann er zur Aufzeichnung aus unterschiedlichen Kameratypen je nach seiner Präferenz oder den Anforderungen des Projektes auswählen. Hierbei können auch unterschiedliche Kameratypen für die beiden Abbildungspfade verwendet werden. Beispielsweise kann eine spezielle Zeitlupenkamera für einen Abbildungspfad und eine weitere Kamera mit normaler Bildrate für den zweiten Abbildungspfad ausgewählt werden.

Ist das Aufnahmeobjektiv trennbar mit der Relaiseinheit verbunden, weist die Relaiseinheit vorteilhaft lichteintrittsseitig einen kameraseitigen Mount auf, welcher insbesondere ein PL- oder ein LPL-Mount, aber auch ein anderer bekannter und am Markt etablierter Mount sein kann, welcher für professionelle Filmoptiken üblich ist. Dieser kann beispielsweise auch ein Canon EF, Canon RF, Nikon F, Nikon Z, Fuji oder Sony E Mount sein. Durch die Verwendung von Adaptern, lassen sich zudem eine Vielzahl von Objektiven mit einem bestimmten Mountstandard an unterschiedliche kameraseitige Mounts adaptieren.

Sind auch eine oder beide Kameras trennbar mit der Relaiseinheit verbunden, ist es vorteilhaft, wenn diese an den Abbildungspfaden des Lichtaustritts, jeweils einen objektivseitigen Mount aufweisen, welcher in die Mounts der Kameras eingreifen und sich dort fixierend verriegeln lassen. Ein solcher Mount kann insbesondere ein PL-Mount, ein LPL-Mount oder ein anderer gängiger Mount sein, wie z.B. Canon EF, Canon RF, Nikon F, Nikon Z oder Sony E Mount.

Aktuelle digitale Filmkameras sind häufig sehr kompakt und leicht. Es ist daher möglich, dass das Gewicht der Kameras vom kameraseitigen Mount, beispielsweise von einem PL- oder LPL-Mount vollständig getragen wird. Zur zusätzlichen weiteren Fixierung können die Kameras mit zusätzlichen Trage- oder Stabilisierungselementen an der Relaiseinheit fixiert werden. Dies ist beispielsweise dann hilfreich, wenn die Verriegelung am Mount der Kamera eine geringe Rotation um die optische Achse nicht vollständig verhindern kann. Auch eine geringe seitliche Verschiebung senkrecht zur optischen Achse lässt sich aufgrund der Toleranzen solcher Mounts nicht vollständig verhindern und kann ebenfalls durch derartige weitere Trageelemente vollständig fixiert werden.

Wird an den Kameras ein gleicher Sensorausschnitt eingestellt, so sind die von den Kameras aufgenommenen Bilder weitgehend deckungsgleich. Kleinere Unterschiede können sich aus der Lage der Sensoren ergeben, die nicht vollständig deckungsgleich in den Abbildungspfaden positioniert sind oder durch Montageungenauigkeiten der Mounts und/oder der beiden zweiten Relaisoptiken. Hierdurch kann sich ein geringer Versatz in den Bildsignalen der Kameras ergeben. Dies kann insbesondere eine Translation, eine Rotation und/oder ein Maßstabsunterschied sein.

Derartige geringfügige Unterschiede der Abbildung der beiden Abbildungspfade können in der Postproduktion elektronisch ausgeglichen werden, in dem die Bilder beider Kameras digital miteinander verglichen werden und die Geometrie der Bilder elektronisch zueinander angepasst wird. Man spricht von einer elektronischen Registrierung, die gewährleistet, dass die beiden Kameras eine Szene vollständig deckungsgleich zueinander abbilden.

Eine Alternative zu einer elektronischen Registrierung ist eine mechanische Registrierung. Hierfür kann das Strahlteilersystem eine mechanische Verschiebevorrichtung umfassen, welche den Sensor von wenigstens einer Kamera in horizontaler und/oder vertikaler Richtung parallel zur Sensorebene verschiebbar macht. Beispielsweise kann die Verschiebevorrichtung wenigstens eine Lagereinrichtung umfassen, die dazu ausgelegt ist, den lichtaustrittsseitigen, objektivseitigen Mount an der Relaiseinheit in einer Ebene senkrecht zum Abbildungspfad verschiebbar zu lagern. Diese kann beispielsweise mit einer Führung, einer Linearführung, eines Kreuzrollenlagers oder eines Schlittens umgesetzt werden. Eine an dem objektivseitigen Mount montierte Kamera kann dadurch in der Ebene senkrecht zum Abbildungspfad (und parallel zur Sensorebene) in horizontaler und/oder vertikaler Richtung verschoben (verfahren) werden, wodurch auch der Sensorausschnitt bezüglich des Abbildungspfades in horizontaler und/oder vertikaler Richtung verschoben wird. Durch die hier beschriebene Verschiebevorrichtung lässt sich somit der Sensor bzw. der Sensorausschnitt bezüglich des Abbildungspfades der Relaiseinheit bequem verschieben und somit in die gewünschte Position bringen.

Konstruktionstechnisch vorteilhaft ist es, eine erste horizontale Verschiebevorrichtung für die Kamera des ersten Abbildungspfades bereitzustellen, welche eine Verschiebung der Kamera bzw. des Sensors (Sensorausschnittes) parallel zur horizontalen Sensorkante ermöglicht, und eine zweite vertikale Verschiebevorrichtung für die Kamera des zweiten Abbildungspfades bereitzustellen, welche eine Verschiebung der Kamera bzw. des Sensors (Sensorausschnittes) in vertikaler Richtung ermöglicht. Dadurch kann mit einem vergleichsweise geringen konstruktionstechnischen Aufwand sowohl eine horizontale, wie auch eine vertikale Verschiebung umgesetzt werden. Alternativ hierzu ist auch denkbar, dass die erste Verschiebevorrichtung für die Kamera des ersten Abbildungspfades und/oder die zweite Verschiebevorrichtung für die Kamera des zweiten Abbildungspfades jeweils dazu ausgebildet sind, die Kameras in vertikaler und horizontaler Richtung (individuell) zu verschieben. Diese alternative Ausgestaltung ist konstruktionstechnischer aufwändiger, jedoch flexibler in der Handhabung, da beide Kameras individuell in horizontaler und vertikaler Richtung verschiebbar sind. Unabhängig von den hier beschriebenen konkreten Ausgestaltungen der Verschiebevorrichtungen, kann diese ferner eine Feineinstellung für die Verschiebung in horizontaler und/oder vertikaler Richtung umfassen. Eine solche Feineinstellung der Verschiebung lässt sich beispielsweise mit einer oder mehreren Einstellspindel(n) realisieren. Eine einmal bestimmte und eingestellte Verschiebung sollte hierbei auch fixierbar sein. Dies kann entweder selbsthemmend erfolgen, beispielsweise durch eine selbsthemmende Einstellspindel, einer Klemmung oder einer Verriegelung der Verschiebevorrichtung.

Mittels einer horizontalen Verschiebung des Sensorausschnittes am objektivseitigen Mount der Relaiseinheit eines Abbildungspfades und einer vertikalen Verschiebung am objektivseitigen Mount des anderen Abbildungspfades, lässt sich bereits eine sehr genaue Registrierung der beiden Abbildungen zueinander erreichen. Zur Einstellung dieser mechanischen Verschiebung können die Bildsignale der Kameras beispielsweise übereinander geblendet werden, wodurch die Deckung der Signale sichtbar wird und entsprechend justiert werden kann.

Für eine Vielzahl von Anwendungen ist eine derartige mechanische Registrierung bereits ausreichend. Wird eine pixelgenaue Registrierung benötigt, kann dies durch eine elektronische weitere Feinanpassung in der Postproduktion zu einem späteren Zeitpunkt erreicht werden.

Es kann weiterhin auch vorteilhaft sein, eine mechanische Einstellmöglichkeit für die Rotation einer Kamera um die optische Achse vorzusehen, um auch geringe Unterschiede in der Rotation der Bilder zueinander auszugleichen. Hierzu kann das Strahlteilersystem ferner eine Rotationsvorrichtung aufweisen, die dazu ausgebildet ist, den objektivseitigen Mount an der Lichtaustrittsseite der Relaiseinheit für den ersten Abbildungspfad und/oder zweiten Abbildungspfad drehbar um die optische Achse des jeweiligen Abbildungspfades zu lagern. Ist eine Kamera an dem jeweiligen Mount angeflanscht (wodurch eine Rotationsausgangsstellung definiert wird), kann die Abbildung auf dem Sensor durch die Verdrehung des Mounts relativ zum Abbildungspfad ebenfalls verdreht werden. Vorteilhaft ist es, wenn die Verdrehung eines solchen Mounts auch fixierbar ist. Dies kann beispielsweise durch eine Klemmung oder mittels einer selbsthemmenden Feineinstellung, zum Beispiel über eine Einstellspindel der Rotationsvorrichtung realisiert werden.

Die hier vorgestellte horizontale und vertikale Einstellung des Sensorausschnitts benötigt lediglich einen Einstellbereich von wenigen Zehntel Millimetern, da sie nur die ansonsten identischen Bildausschnitte der Sensoren in Deckung bringt. Wird der Einstellbereich der horizontalen und/oder der vertikalen Verschiebevorrichtung auf einen Verstellweg von einigen Millimetern erhöht, kann dies auch zur Anpassung von Bildausschnitten verwendet werden, wie im Folgenden vorgestellt.

### Verwendung für unterschiedliche Bildausschnitte

Üblicherweise wird, wenn unterschiedliche Seitenverhältnisse für die Auswertung einer Szene benötigt werden, eine maximal große Sensorfläche für die Aufnahme ausgewählt, aus der sich die beiden Seitenverhältnisse mittels Bildbeschneidung bilden lassen. Dies ist beispielsweise üblich, wenn ein Filmprojekt mit einem Seitenverhältnis von 2.4:1 als sogenanntes Cinemascope im Kino ausgewertet wird und zusätzlich für das Fernsehen ein Seitenverhältnis von 16:9 bereitgestellt werden soll. In diesem Fall wird meist eine maximal große Sensorfläche belichtet, aus der dann beide Formate durch Beschnitt gebildet werden. Dies ist in diesem Fall relativ einfach zu realisieren, da beide Auswertungen eine horizontale Orientierung aufweisen. Das heißt, die horizontale Bildseite ist in beiden Fällen länger als die vertikale.

Für die Auswertung in sozialen Medien wird zunehmend eine vertikale Bildorientierung gefordert, häufig in einem Seitenverhältnis von 9:16. Ein solches Seitenverhältnis lässt sich gut auf einem hochkant gehaltenen Mobiltelefon abbilden. Will man ein solches Seitenverhältnis von 9:16 aus einer reinen Bildbeschneidung eines horizontal orientierten Ausgangsbildes schaffen, dann führt dies zu einem Verlust von einem erheblichen Anteil der Bildinformation an den Bildseiten. Dies kann dazu führen, dass eine Szene nicht mehr verstehbar dargestellt wird, wenn beispielsweise Schauspieler, die sich seitlich im Bild befinden, durch die Bildbeschneidung nicht mehr dargestellt werden.

Vorteilhafter ist es, wenn bereits bei der Aufnahme ein zweiter vertikal orientierter Bildausschnitt aufgenommen wird, der den Sensor möglichst großflächig ausnutzt. Dies lässt sich dadurch erreichen, dass eine der Kameras beispielsweise an seinem Mount um 90° um die optische Achse des Abbildungspfades verdreht montiert wird. In diesem Fall nimmt eine Kamera eine horizontale und die andere eine vertikale Bildorientierung auf. Die Bilder überlappen sich in einem Bereich in der Bildmitte, nutzen aber beide eine identisch große Sensorfläche aus, die erheblich größer ist, als wenn die vertikale Orientierung lediglich durch Bildbeschnitt gebildet würde.

Ein PL-Mount oder ein LPL-Mount sind übliche Verbindungen zwischen einer Kamera und Aufnahmeobjektiven professioneller Filmausrüstungen. Sie weisen neben einem Führungsring, der das Objektiv zum Sensor zentriert, auch einen Registrierpin auf, der in einen um jeweils 90° verdrehten Führungsschlitz eingreift. Mittels dieses Pins lassen sich Aufnahmeobjektive mit einer Kamera in einem definierten Winkel, der um +/-90°, beziehungsweise um 180° verdreht werden kann, verbinden. Umgekehrt lässt sich hiermit auch an einem objektivseitigen PL- oder LPL-Mount, wie ihn die Relaiseinheit aufweist kann, eine Kamera um 90° verdreht befestigen. Somit ist mittels eines PL- oder LPL-Mounts ein Wechsel von einer horizontalen zu einer vertikalen Bildorientierung durch eine Verdrehung am Mount um 90° leicht zu erreichen, indem die Kamera nicht mehr aufrecht, sondern um 90° verdreht an die Relaiseinheit montiert wird.

Weist die Relaiseinheit keinen PL- oder LPL-Mount auf, sondern beispielsweise einen Mount von Canon, Nikon oder Sony oder einem anderen Hersteller, dann kann der objektivseitige Mount der Relaiseinheit von wenigstens einer der Kameras durch die oben beschriebene Rotationsvorrichtung mechanisch so gelagert sein, dass es sich um 90° um die optische Achse verdrehen lässt. Vorteilhaft ist diese Verdrehung bei 90° arretierbar.

Zeichnet der Sensor einer Kamera eine vertikale Bildorientierung auf und der Sensor der anderen Kamera eine horizontale, so kann dies dazu führen, dass die jeweiligen Bildausschnitte insbesondere in ihrer vertikalen Ausrichtung nicht optimal zu der horizontalen Ausrichtung abgestimmt sind. Wird beispielsweise ein Mensch in beiden Varianten abgebildet, so würde der Kopf in einer horizontalen Ausrichtung vermutlich relativ nah an der oberen Bildkante abgebildet. Wird an der anderen Kamera mit einer vertikalen Ausrichtung der Bildausschnitt lediglich zentrisch um 90° rotiert, dann wäre der Kopf des Darstellers in diesem Fall relativ "tief" im Bild positioniert.

Man spricht hierbei vom sogenannten "Headroom", dem Abstand den ein Kopf oder Objekt zur oberen Bildkante aufweist. Aus ästhetischen Gründen wird dieser bei unterschiedlichen Seitenverhältnissen entsprechend angepasst, damit die vertikale Platzierung eines Darstellers für beide Auswertungen stimmig wirkt. Hierzu ist es vorteilhaft, wenn der vertikale Bildausschnitt der Kameras zueinander angepasst werden kann, damit in beiden Fällen ein stimmiger Headroom erreicht wird.

Eine solche Anpassung des Headrooms kann mittels der oben erläuterten vertikalen Verschiebevorrichtung bestimmt und eingestellt werden. Hierbei kann der Bildausschnitt der vertikalen Orientierung so verschoben werden, dass der Bildinhalt "höher" platziert wird, oder der dargestellte Bildausschnitt der horizontalen Orientierung kann so verschoben werden, dass der Bildinhalt "tiefer" platziert wird.

Für die entsprechende Positionierung ist es vorteilhaft, wenn sowohl das Aufnahmeobjektiv, als auch die Relaiseinheit einen Bildkreis darstellen bzw. übertragen können, der größer ist, als die für die Abbildung genutzte Sensorfläche, um ausreichend Raum für eine solche Verschiebung zu gewährleisten.

Ebenso kann es vorteilhaft sein, wenn zumindest eine Kamera auch im abgebildeten horizontalen Bildausschnitt einstellbar ausgeführt ist, um beispielsweise ein wichtiges Bildelement horizontal so zu positionieren, dass es möglichst deutlich sichtbar wird.

Es ist auch vorstellbar, dass die Auflösungen, Sensorgrößen oder die Pixeldichte der Kameras bei der Erstellung von unterschiedlichen Seitenverhältnissen unterschiedlich sind. Beispielsweise kann es sinnvoll sein, für eine hochauflösende Kinoauswertung ein Seitenverhältnis von 2.4:1 mit der maximal möglichen Auflösung mit einer sehr hochauflösenden Kamera aufzunehmen, während die andere Kamera mit einer deutlich geringeren Auflösung aufnimmt, die aber beispielsweise für die Anforderungen von Social Media Auswertungen ausreichend ist. Ebenso ist es natürlich auch möglich, unterschiedliche Bildraten, Belichtungszeiten, Filterungen und unterschiedliche Seitenverhältnisse beliebig miteinander zu kombinieren.

### Synchronisierung der Kameras

Bei einer zeitgleichen Aufnahme durch zwei oder mehr Kameras des Strahlteilersystems ist es vorteilhaft, wenn die Kameras derart miteinander gekoppelt sind, dass sie Steuersignale, Taktsignale, Zeitsignale oder Metadaten miteinander teilen können.

Dies beinhaltet die Möglichkeit, die Aufnahme einer Laufbildfolge der Kameras zum gleichen Zeitpunkt zu starten und zu stoppen, um ein identisches Zeitfenster eines realen Ereignisses aufzuzeichnen. Dies kann erreicht werden, indem den wenigstens zwei Kameras durch einen Remoteschalter zeitgleich ein Start- beziehungsweise ein Stopp-Signal gesendet wird.

Eine weitere übliche Methode das zeitgleiche Auslösen und Anhalten einer Aufnahme von zwei oder mehr Kameras umzusetzen, ist eine sogenannte Master-Slave Verbindung der Kameras. Hierbei wird eine der Kameras als Master-Kamera bestimmt, während die anderen als Slave-Kameras laufen. Einstellungen oder Steuersignale werden von der Master-Kamera an die Slave-Kameras gesendet und zeitgleich ausgeführt. Eine solche Verbindung erfolgt meist über eine Steuerleitung, häufig über ein Ethernet-Protokoll oder Bluetooth.

Gerade in Hinblick auf die weitere Verarbeitung und Auswertung der durch die Kameras erzeugten Filmclips ist es von Vorteil, wenn die aufgezeichneten Laufbildsequenzen eine möglichst einheitliche Formatierung, beziehungsweise einheitliche Metadaten aufweisen. So kann erreicht werden, dass sich eine Schnittfolge vom Aufnahmematerial einer Kamera auf das Aufnahmematerial der anderen Kamera automatisiert oder weitgehend automatisiert übertragen lässt. Es lässt sich somit mit einem vergleichsweise geringen Aufwand, eine zweite Version eines Films fertigen, welcher die gewünschte Varianz aufweist, die beispielsweise durch eine unterschiedliche Bildrate oder ein unterschiedliches Seitenverhältnis festgelegt ist.

Daher sollten die von den Kameras aufgezeichneten Filmclips gleiche Clipnamen aufweisen, gleiche Zeitmarken beinhalten und bei gleicher Bildrate der Kameras phasengleich zu einander laufen. Gleiche Zeitmarken lassen sich dadurch erreichen, dass die Kameras mit einem externen Zeitgeber verbunden sind oder deren interne Uhren zueinander synchronisiert sind.

Weisen beide Kameras die gleiche Bildfrequenz auf, sollten diese eine Laufbildsequenz vorteilhaft auch phasengleich aufnehmen. Dies bedeutet, dass die Aufnahme jedes Einzelbildes einer Laufbildsequenz zum gleichen Zeitpunkt beginnt und zu einem späteren Zeitpunkt zeitgleich beendet wird. Beispielsweise wird so auch die Bewegungsunschärfe eines sich in Bewegung befindlichen Objektes von beiden Kameras gleich abgebildet.

Die Synchronisation der Belichtungsphasen der Kameras lässt sich über einen externen Syncgenerator erreichen, welcher den Kameras ein gemeinsames Taktsignal liefert. Abhängig vom Kameratyp ist eine solche Synchronisation oft auch im Master-Slave Modus möglich.

Phasenstabil kann im Gegensatz zu phasengleich bedeuten, dass der Belichtungsbeginn und/oder das Belichtungsende der Aufnahmen der Einzelbilder nicht zeitgleich ist. Dies ist beispielsweise der Fall, wenn zwei Kameras zwar mit gleicher Bildrate, aber mit unterschiedlichen Belichtungszeiten laufen. Hierbei können sowohl der Beginn, als auch das Ende einer Einzelbildbelichtung oder beide Ereignisse nicht zeitgleich erfolgen, je nachdem, wie diese beiden Belichtungsfenster zeitlich zueinander liegen.

Es ist ausdrücklich auch möglich, dass beide Kameras phasenversetzt zu einander laufen. Dies kann beispielsweise bedeuten, dass die eine Kamera eine Belichtung beginnt, während die zweite zeitgleich ihre Belichtung beendet und umgekehrt. Bei einer phasenversetzten Aufnahme mit jeweils einem 180° Shutter, werden beide Kameras gleichlang belichtet und nehmen das Licht in gegenläufigen Zeitfenstern auf, die sich zeitlich nicht überlagern.

Dies lässt sich nutzen, wenn beispielsweise auch Lichtquellen dem System in der Art zugeordnet sind, dass diese ebenfalls mit den Belichtungsfrequenzen der Kameras synchronisiert sind und dabei eine Szene gepulst und jeweils nur in der Belichtungsphase der einen oder der anderen Kamera beleuchten. Somit sind Lichtquellen möglich, welche nur auf der einen oder der anderen Variante einer Bildsequenz sichtbar werden. Beispielsweise lassen sich so von einer Szene zwei völlig unterschiedlich Lichtvarianten aufnehmen. Diese können während des Schnitts in jedem Mischungsverhältnis miteinander kombiniert werden oder als dynamischer Übergang zu einem beliebigen Zeitpunkt und mit beliebiger Überblendungsdauer miteinander kombiniert werden.

Läuft eine Kamera nicht mit der gleichen, aber mit einem Vielfachen der Bildrate der anderen Kamera, so ist, abhängig vom Kameratyp meist ebenfalls eine phasenstabile Kopplung der Kameras möglich und sollte nach Möglichkeit genutzt werden.

Lassen sich die Belichtungsphasen der Kameras aufgrund von unterschiedlichen Bildraten nicht mehr synchronisieren, so können mit Hilfe der Zeitstempel der Einzelbilder und der Zuordnung von Clipnamen ebenfalls Schnittfolgen einer Variante schnell und weitgehend automatisiert erzeugt werden.

Hinsichtlich der (mechanischen) Ausführung des erfindungsmäßigen Strahlteilersystems sei noch ergänzend hinzugefügt, dass das Strahlteilersystem nicht nur ein anflanschbares Aufnahmeobjektiv und anflanschbare Kameras umfassen kann, welche mittels von standardisierten Mounts mit der Relaiseinheit verbunden sind. Ebenso ist es auch möglich, dass sowohl die Kameras, als auch das Aufnahmeobjektiv in einer nicht trennbaren Einheit mit der Relaiseinheit zusammengefasst werden und ein einteiliges Strahlteilersystem bilden. Sind beispielsweise die Kameras in das System integriert, lässt sich hierdurch eine sehr kompakte Bauform erreichen, da elektronische Komponenten zusammengefasst werden können und nicht jede Kamera ein eigenes Gehäuse, eine eigene Bildverarbeitung und eine eigene Bildaufzeichnung aufweisen muss. Auch die exakte mechanische Ausrichtung der Sensoren, insbesondere hinsichtlich ihrer Deckungsgleichheit lässt sich in einem geschlossen System einfacher umsetzen.

Ein Vorteil der Integration des Aufnahmeobjektivs in ein geschlossenes System einer einteiligen Strahlteilervorrichtung ist beispielsweise, dass sich hierdurch am Luftbild die Pupillenlagen des Aufnahmeobjektivs und ersten Relaisoptik besser aufeinander abstimmen lassen. Eine solche Abstimmung der Pupillenlagen ist deutlich einfacher zu realisieren, wenn nicht frei wählbare, am Markt bereits existierende Objektive genutzt werden. Ebenso ist es möglich, dass nur das Aufnahmeobjektiv oder auch nur eine oder mehrere Kameras mit der Relaiseinheit nicht trennbar ausgeführt sind.

### KURZBESCHREIBUNG DER FIGUREN

Die Erfindung wird nachfolgend lediglich beispielhaft anhand der Figuren näher erläutert.
**Fig. 1** zeigt in einer schematischen Darstellung eine Ausführungsform eines erfindungsgemäßen Strahlteilersystems mit einer Relaiseinheit, einem an der Relaiseinheit lösbar montierbaren Aufnahmeobjektiv und zwei lösbar montierbaren Kameras.
**Fig. 2** zeigt in einer schematischen Querschnittsdarstellung eine weitere Ausführungsform eines erfindungsgemäßen Strahlteilersystems, das als einteiliges Strahlteilersystem ausgebildet ist.
**Fig. 3** zeigt in einer vereinfachten schematischen Querschnittsdarstellung eine Detailansicht der Relaiseinheit eines Strahlteilersystems mit zwei Strahlteilerelementen und mehr als zwei Abbildungspfaden.
**Fig. 4** zeigt eine Anordnung unterschiedlicher Sensorausschnitte beider Aufnahmekameras eines erfindungsmäßigen Strahlteilersystems.
**Fig. 5** zeigt eine stark vereinfachte perspektivische Darstellung einer vertikalen und horizontalen Verschiebevorrichtung der Mounts an der Relaiseinheit.
**Fig. 6** zeigt in vereinfachter schematischer Darstellung eine Ausführungsform eines erfindungsgemäßen Strahlteilersystems mit zugeordneter Beleuchtungseinrichtung.

### DETAILLIERTE BESCHREIBUNG DER FIGUREN

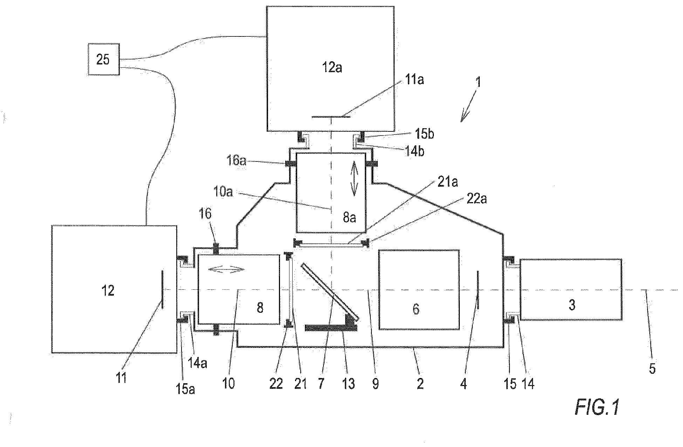

**Fig. 1** zeigt eine Ausführungsform eines erfindungsgemäßen Strahlteilersystems 1 in vereinfachter Form. Die von einer aufzuzeichnenden Szene (in Fig.1, Fig. 2 und Fig. 3 nicht dargestellt) ausgesandte oder reflektierte Strahlung 5 dringt durch das Aufnahmeobjektiv 3 in die Relaiseinheit 2 ein und wird als reelles Luftbild 4 im Strahlengang abgebildet. Ein derartiges Aufnahmeobjektiv 3 kann eine Festbrennweite oder ein Zoomobjektiv sein.

Von der ersten Relaisoptik 6 wird das Luftbild 4 positiv gebrochen oder nach Unendlich abgebildet. Eine Abbildung nach Unendlich ist insofern vorteilhaft, da sich durch das Einfügen von planparallelen optischen Elementen im Abbildungsstrahlengang, die Abbildung nicht verändert.

Die erste Relaisoptik 6 ist hierbei so auf die zweiten Relaisoptiken 8, 8a abgestimmt, dass zwischen ihnen ein ausreichender Abstand entlang der optischer Achse besteht, so dass wenigstens ein Strahlteilerelement 7 dazwischen eingefügt werden kann, welches den Abbildungsstrahlengang 9 in einen transmittierten Abbildungspfad 10 und einen reflektierten Abbildungspfad 10a aufteilt. Vorteilhaft ist der Strahlengang zwischen der ersten Relaisoptik 6 und den beiden zweiten Relaisoptiken 8, 8a im Wesentlichen parallel.

Mittels der zweiten Relaisoptik 8 des transmittierten Abbildungspfades 10 wird der Abbildungsstrahlengang des Luftbildes 4 auf dem Sensor 11 der Kamera 12 abgebildet. Mittels der zweiten Relaisoptik 8a des reflektierten Abbildungspfades 10a wird der Abbildungsstrahlengang des Luftbildes 4 ferner auf dem Sensor 11a der Kamera 12a abgebildet.

Beiden Sensoren 11, 11a wird somit ein identischer Bildkreis eines identischen Blickpunktes zur Verfügung gestellt wird. Unter der Voraussetzung das der Strahlengang zwischen der ersten Relaisoptik 6 und den zweiten Relaisoptiken 8, 8a im Wesentlichen parallel ist, sind die Brennweiten der ersten Relaisoptik 6 und den zugeordneten zweiten Relaisoptiken 8, 8a im Wesentlichen gleich gewählt, damit das auf den jeweiligen Sensoren 11, 11a abgebildete Bild dieselbe Größe aufweist, wie das Luftbild 4. Vorteilhafterweise können die Brennweiten der zweiten Relaisoptiken 8, 8a geringfügig in einem Bereich von bis zu 10% länger bestimmt sein, als die der ersten Relaisoptik 6, was zu einer entsprechenden Vergrößerung der Abbildung auf den jeweiligen Sensoren 11, 11a gegenüber dem Luftbild 4 führt und Vignettierungen und Randunschärfen zu reduzieren hilft, ohne die Brennweitencharakteristik des Aufnahmeobjektives 3 grundlegend zu ändern. Es ist auch möglich, dass eine der zwei zweiten Relaisoptiken 8, 8a eine zur anderen der zwei zweiten Relaisoptiken 8, 8a deutlich unterschiedliche Brennweite aufweist, um beispielsweise einen vergrößerten Bildausschnitt aufzuzeichnen oder einen Größenunterschied der Sensoren 11, 11a von unterschiedlichen Typen der Kameras 12, 12a zu kompensieren. Grundsätzlich ist jedes Verhältnis von Brennweiten der ersten Relaisoptik 6 zu den zweiten Relaisoptiken 8, 8a möglich.

Das Aufnahmeobjektiv 3 ist trennbar (lösbar) mit der Relaiseinheit 2 verbunden, wobei das Aufnahmeobjektiv 3 an der Strahlungsaustrittsseite einen objektivseitigen Mount 14 aufweist, welcher auf der Relaiseinheit 2 in einen kameraseitigen Mount 15 eingreift und sich formschlüssig, verdrehsicher verbinden und verriegeln lässt. Ein solcher objektivseitiger Mount 14 und der korrespondierende kameraseitige Mount 15 sind vorteilhaft existierende Standardverbindungen, wie sie beispielsweise von den Firmen ARRI, Panavision, Sony, Canon, Nikon oder Fuji verwendet werden. Eine vorteilhafte Ausführung stellt der weltweit im professionellen Filmbereich genutzte Standard eines PL-Mounts oder eines LPL-Mounts als ein solches objektivseitiges Mount 14, beziehungsweise kameraseitiges Mount 15 dar.

Die an die Relaiseinheit 2 montierten Kameras 12, 12a weisen vorteilhaft ebenfalls einen standardisierten kameraseitigen Mount 15a, 15b auf, der in einen objektivseitigen Mount 14a, 14b der Relaiseinheit 2 eingreift und sich mit diesem formschlüssig, verdrehsicher verbinden und verriegeln lässt. Diese Verbindung ist vorteilhaft ebenfalls als existierende Standardverbindung ausgelegt und weist Mounts der Firmen ARRI, Panavision, Sony, Canon, Nikon oder Fuji auf. Auch hier ist ein PL-Mount oder LPL-Mount als defacto-Standard der Filmindustrie eine vorteilhafte Lösung.

Die zweiten Relaisoptiken 8, 8a weisen jeweils eine Fokussiereinheit 16, 16a auf, mittels derer eine Verschiebung der Relaisoptiken 8, 8a in axialer Richtung entlang der jeweiligen Abbildungspfade 10, 10a möglich ist. Durch diese Verschiebung lassen sich die zweiten Relaisoptik 8, 8a (unabhängig voneinander) jeweils so justieren, dass die Abbildung auf den jeweiligen Sensoren 11, 11a fokussiert ist. Die jeweiligen Fokussiereinheiten 16, 16a sind vorteilhaft arretierbar oder selbsthemmend ausgeführt, so dass eine Verstellung während der Aufnahme nicht unbeabsichtigt möglich ist, was in der Darstellung jedoch nicht näher gezeigt wird. Die jeweiligen Fokussiereinheiten 16, 16a dienen lediglich zu Abstimmung des Auflagemaßes der zweiten Relaisoptik 8, 8a zu den jeweiligen Sensoren 11, 11a.

Anstelle der Fokussiereinheiten 16, 16a für die zweiten Relaisoptiken 8, 8a kann die Abstimmung des Auflagemaßes auch mittels von Shims oder einer eng tolerierten Fertigung erfolgen. Die eigentliche Schärfeeinstellung einer Szene erfolgt jedoch am Aufnahmeobjektiv 3.

Beiden Abbildungspfaden 10, 10a kann ein Filter 21, 21a zugeordnet werden, welcher zwischen dem Strahlteilerelement 7 und den zweiten Relaisoptiken 8, 8a angeordnet ist. Ein solcher Filter 21, 21a ist vorteilhaft so ausgelegt, dass er sich auswechseln lässt und je nach gewünschter Filterung individuell bestimmt und eingesetzt werden kann. Hierbei kann es sich um Graufilter, Polarisationsfilter, Langpassfilter, Kurzpassfilter, Weichzeichnungsfilter, Sternfilter, Streakfilter oder weitere Filter handeln. Oft kann es wünschenswert sein, dass nur einer der Abbildungspfade 10, 10a eine solche Filterung aufweist, da sich so zwei unterschiedliche Varianten, jeweils mit und ohne Filterung aufnehmen lassen.

Ein Syncgenerator 25 kann mit beiden Kameras 12, 12a verbunden sein und versorgt diese mit Taktsignalen und/oder Timecode-Informationen, sodass die Kameras 12, 12a phasengleich, phasenstabil oder phasenversetzt zueinander laufen können. Bei einer phasengleichen Aufnahme laufen beide Kameras 12, 12a mit der gleichen Bildfrequenz und der Beginn der Aufnahme jedes Einzelbildes, ebenso wie das Ende der Aufnahme jedes Einzelbildes erfolgt zeitgleich. Bei einer phasenstabilen Aufnahme kann die Belichtungszeit beider Kameras 12, 12a unterschiedlich sein, ebenso wie der Startpunkt und/oder der Endpunkt eines Belichtungsvorganges eines Einzelbildes. Dennoch bleiben die zeitlichen Verhältnisse des jeweiligen Beginns und Endes einer Einzelbildaufnahme zueinander konstant. Bei einer phasenversetzten Aufnahme wird der Sensor 11, 11a einer Kamera 12, 12a belichtet, während der andere Sensor 11, 11a nicht belichtet wird und umgekehrt. Anstelle eines Syncgenerators 25 ist auch eine, hier nicht gezeigt direkte Verbindung als Master-Slave-Verbindung zwischen den Kameras 12, 12a möglich.

Das Strahlteilerelement 7 kann ein Teilungsverhältnis von 50:50 oder auch ein beliebiges anderes Teilungsverhältnis aufweisen. Vorteilhaft ist das Strahlteilerelement 7 mittels einer Strahlteilerhalterung 13 trennbar (auswechselbar) mit der Relaiseinheit 2 verbunden, sodass je nach Bedarf unterschiedliche Strahlteilerelemente 7 mit unterschiedlichen Teilungsverhältnissen in den Abbildungsstrahlengang positioniert und fixiert werden können. Vorteilhaft greift die Strahlteilerhalterung 13 des Strahlteilerelements 7 formschlüssig in die Relaiseinheit 2 ein und ermöglicht eine passgenaue Positionierung im Strahlengang. Die Wechselvorrichtung des Strahlteilerelements 7, sowie der Strahlteilerhalterung 13 ist in der Darstellung nicht näher ausgeführt.

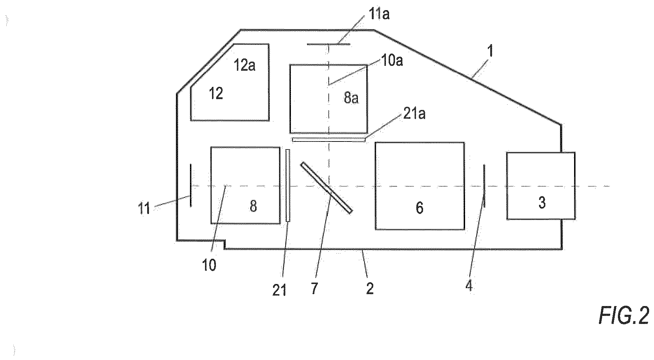

Die in **Fig. 2** dargestellte Ausführungsform unterscheidet sich von der in **Fig. 1** gezeigten Aufführungsform im Wesentlichen dadurch, dass sowohl das Aufnahmeobjektiv 3 als auch die Kameras 12, 12a mit den zugehörigen Sensoren 11, 11a in das Strahlteilersystem integriert sind. Das Aufnahmeobjektiv 3 kann als Festbrennweite oder Zoomobjektiv ausgeführt sein.

Durch eine Integration der Kameras 12, 12a in das Strahlteilersystem 1 ist es insbesondere möglich, die Elektroniken der Kameras 12, 12a zusammenzufassen und einfacher miteinander zu synchronisieren. Auch die Verwendung eines fest verbauten Aufnahmeobjektives 3 erleichtert das optische Design der hierauf abgestimmten ersten Relaisoptik 6.

Grundsätzlich können sowohl eine oder mehrere der Kameras 12, 12a trennbar oder fest in das Strahlteilersystem 1 integriert sein. Ebenso kann das Aufnahmeobjektiv 3 als trennbarer oder fester Bestandteil des Systems ausgeführt sein.

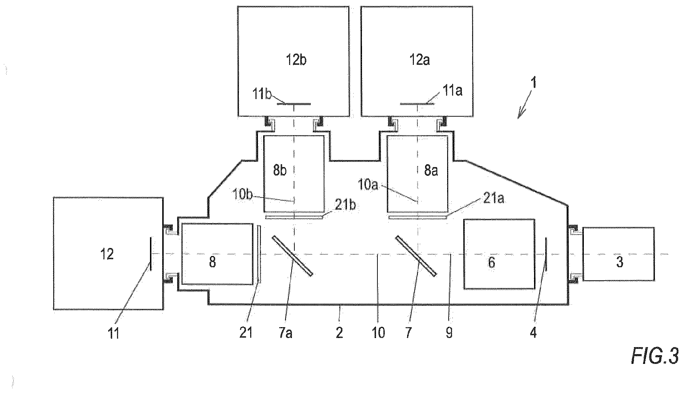

**Fig. 3** zeigt eine Ausführungsform, bei der der Strahlengang 9, welcher von der ersten Relaisoptik 6 im Wesentlichen nach Unendlich abgebildet wird durch ein erstes strahlteilendes Element 7 in einen transmittierten ersten Abbildungspfad 10 und einen reflektierten, zweiten Abbildungspfad 10a geteilt wird, welcher mittels einer zweiten Relaisoptik 8a, eine Abbildung auf dem Sensor 11a der Kamera 12a erzeugt. Der transmittierte Abbildungspfad wird mittels eines zweiten Strahlteilerelements 7a weiter aufgeteilt und durch die Relaisoptiken 8, 8b auf den Sensoren 11, 11b der Kameras 12, 12b abgebildet.

In dieser Ausführungsform werden den drei Kameras 12, 12a, 12b jeweils identische Bildkreise der Abbildung vom Luftbild 4 des Aufnahmeobjektives 3 zur Verfügung gestellt. Das Aufführungsbeispiel zeigt, dass auch mehr als zwei Abbildungsstrahlengänge möglich sind.

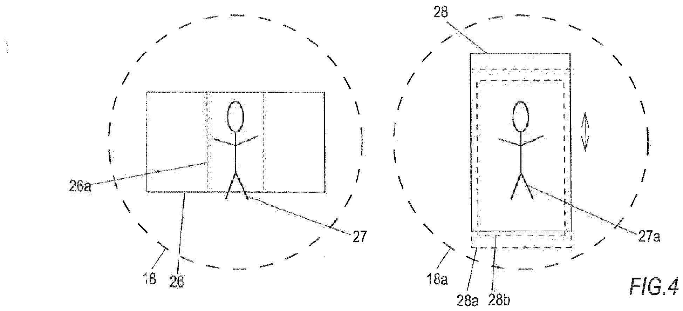

**Fig. 4** zeigt zwei Bildkreise 18, 18a die auf der Sensorebene der Kameras 12, 12a abgebildet werden. Vorteilhaft sind hierbei die vom Aufnahmeobjektiv 3 erzeugte Zwischenabbildung sowie die von der ersten Relaisoptik 6 und den zweiten Relaisoptiken 8, 8a übertragenen Bildkreise 18, 18a grösser, als die Bildfenster 26, 28, 28a, 28b, welche als Sensorausschnitte von den Sensoren 11, 11a der Kameras 12, 12a aufgezeichnet werden.

Hierdurch ist es möglich, die Bildfenster 26, 28, 28a, 28b innerhalb der zur Verfügung gestellten Bildkreise 18, 18a geringfügig in horizontaler und/oder vertikaler Richtung zu verschieben. Mittels dieser Verschiebung lässt sich die Registrierung der beiden bestimmten Sensorausschnitte zueinander in Deckung zu bringen oder ein Bildausschnitt modifizieren.

Die linke Darstellung zeigt einen schemenhaft dargestellten Darsteller 27, welcher vom Aufnahmeobjektiv 3 und mittels der Relaisoptiken 6, 8, 8a auf einem der beiden Sensoren 11, 11a abgebildet wird, in einem horizontal orientierten Bildfenster mit einem Seitenverhältnis von 16:9. Ein solcher Bildausschnitt kann beispielsweise in einer hohen Auflösung für eine Fernsehauswertung und eine Kinoproduktion gefordert sein. Die gestrichelte Linie zeigt einen vertikalen Cutout aus dem horizontalem Bildfenster 26a, wie er beispielsweise für eine Nutzung im Bereich Social Media gewünscht sein kann, da hier oft mit einem vertikalen Bildseitenverhältnis von 9:16 gearbeitet wird. Es zeigt sich, dass der reine Beschnitt auf ein Seitenverhältnis von 9:16 das Bild an beiden Seiten um jeweils mehr als ein Drittel beschneiden würde und elementare Bereiche des Bildes verloren gehen.

Die rechte Darstellung von **Fig. 4** zeigt den identischen Bildkreis 18a wie er im zweiten Abbildungspfad zur Verfügung gestellt wird und die Abbildung des Darstellers 27a in identischer Größe. Das vertikal orientierte Bildfenster 28 wird erreicht, indem die Kamera 11, 11a eines Abbildungsstrahlenganges um 90° um die optische Achse rotiert montiert ist. Dies ist mittels der bereits beschriebenen PL- oder LPL-Mounts möglich, da diese eine um jeweils 90° verdrehte Nut aufweisen, in welche ein Registrierpin am Kameramount eingreift.

Es zeigt sich auch, dass der Darsteller 27a im vertikal orientierten Bildfenster 28 relativ "tief" positioniert ist und der Bereich über seinem Kopf zur oberen Bildkante vergleichsweise groß ist. Vorteilhaft ist es daher, wenn wenigstens eine der Kameras 12, 12a eine Verschiebevorrichtung aufweist, mit welcher der vertikale Bildausschnitt bestimmt und eingestellt werden kann. Ein solches verschobenes vertikal orientiertes Bildfenster 28a zeigt einen nach unten verschobenen Bildausschnitt, der weniger Raum über dem Kopf des Darstellers zeigt und organischer wirkt.

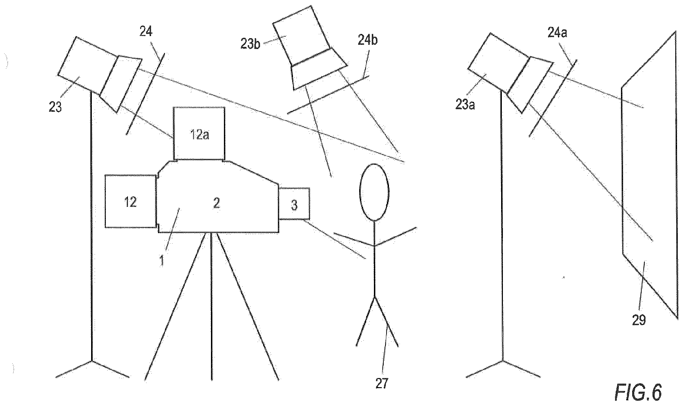

Eine solche vertikale Verschiebung lässt sich erreichen, indem der objektivseitige Mount der Relaiseinheit 2 im Abbildungspfad einer zweiten Relaisoptik 8, 8a parallel zur vertikalen Bildkante des Sensors 11, 11a verschiebbar und fixierbar ausgeführt wird. Dies wird im Folgenden in **Fig. 6** näher erläutert.

Denkbar ist auch, dass ein verschobenes und verkleinertes vertikal orientiertes Bildfenster 28b bestimmt wird. Dies kann durch eine Reduzierung der Fläche des aufgezeichneten Sensorausschnittes erfolgen oder beispielsweise auch mittels einer Kamera 12, 12a eines unterschiedlichen Typs, die einen Sensor 11, 11a mit einer geringeren Auflösung aufweist, da für eine Auswertung in Social Media Kanälen eine geringere Auflösung oft ausreichend ist.

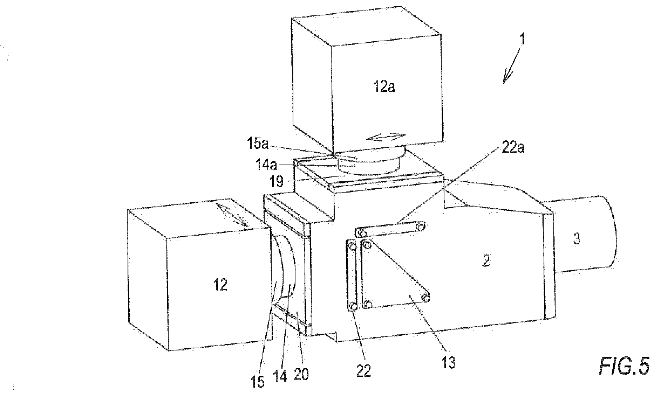

**Fig. 5** zeigt eine vereinfachte perspektivische Darstellung eines Strahlteilersystems 1 mit einem Aufnahmeobjektiv 3, sowie zwei Kameras 12, 12a, welche mit der Relaiseinheit 2 verbunden sind, die eine vertikale und eine horizontale Verschiebevorrichtung 19, 20 aufweist. Die beiden kameraseitigen Mounts 15, 15a der Kameras 12, 12a greifen in die objektivseitigen Mounts 14, 14a der Relaiseinheit 2 ein und sind dort verriegelt.

Mittels der horizontalen Verschiebevorrichtung 20 lässt sich der an ihr starr befestigte objektivseitige Mount 14 in horizontaler Richtung parallel zur Sensorebene verschieben. Hierbei wird nur das objektivseitige Mount 14 verschoben, die ihm zugeordnete (hier nicht gezeigte) zweite Relaisoptik bleibt zentrisch in der optischen Achse fixiert. Durch eine Verschiebung des objektivseitigen Mounts 14 wird auch die Kamera 12 mitsamt ihrem Sensor 11 relativ zum transmittierten Abbildungspfad verschoben, wodurch sich die Position der Abbildung auf dem Sensorausschnitt ebenfalls verschiebt. Diese Einstellung kann zur Registrierung der beiden Sensoren 11, 11a in horizontaler Ausrichtung oder zur Bestimmung eines veränderten horizontalen Bildausschnittes verwendet werden.

Mittels der vertikalen Verschiebevorrichtung 19 lässt sich der an ihr starr befestigte objektivseitige Mount 14a in vertikaler Richtung parallel zur Sensorebene verschieben. Hierbei wird nur der objektivseitige Mount 14a verschoben, die ihm zugeordnete (hier nicht gezeigte) zweite Relaisoptik bleibt zentrisch in der optischen Achse des reflektierten Abbildungspfades fixiert. Durch eine Verschiebung des objektivseitigen Mounts 14a wird auch die Kamera 12a mitsamt ihrem Sensor 11a relativ zum reflektierten Abbildungspfad verschoben, wodurch sich die Position der Abbildung auf dem Sensorausschnitt ebenfalls verschiebt. Diese Einstellung kann zur Registrierung der beiden Sensoren 11, 11a in vertikaler Ausrichtung oder zur Bestimmung eines veränderten vertikalen Ausschnittes verwendet werden.

Eine solche Verschiebevorrichtung 19, 20 kann beispielsweise mittels einer Gleitführung, einer Linearführung, eines Schlittens oder eines Kreuzrollenlagers ausgeführt sein. Vorteilhaft ist die Bestimmung der Verschiebung mittels einer, hier nicht gezeigten Feineinstellung, beispielweise über eine Gewindespindel präzise möglich. Zur Registrierung ist lediglich eine Verschiebung von wenigen Zehntelmillimetern notwendig, für die Bestimmung eines Bildausschnittes sollte der Einstellbereich einige mm umfassen. Vorteilhaft lassen sich die bestimmten und eingestellten Verschiebungen auch fixieren, beispielsweise über eine hier nicht gezeigte selbsthemmende Ausführung, eine Klemmung, eine Verschraubung oder eine Rastung.

Es ist auch denkbar, dass die horizontale Verschiebung am reflektierten Abbildungspfad und die vertikale Verschiebung am transmittierten Abbildungspfad vorgenommen wird. Ebenso kann an einem oder beiden Abbildungspfaden auch eine Verschiebevorrichtung vorgesehen sein, die eine Einstellung in horizontaler und vertikaler Richtung ermöglicht, wie dies bei Kreuztischen bekannt ist.

Eine vorteilhafte Weiterbildung ist die Möglichkeit, über eine in **Fig. 5** nicht weiter gezeigte Vorrichtung auch eine Rotation um das Zentrum eines des objektivseitigen Mounts 14, 14a anzubieten. Eine solche Rotation kann zur Feinabstimmung der Registrierung von minimalen Rotationsfehlern in der Abbildung der beiden Kameras 12, 12a genutzt werden, oder um durch eine Rotation um 90° die Sensorausrichtung in eine vertikale oder horizontale Ausrichtung zu bringen.

**Fig. 5** zeigt auch zwei eingesetzte Filterhalter 22, 22a, die an die Relaiseinheit 2 montiert sind. Die Filterhalter 22, 22a umfassen vorteilhaft auch ein Abdeckblech, welches die Relaiseinheit 2 vor Lichteintritt an dieser Stelle schützt. Beispielhaft ist hier vereinfacht eine Verschraubung gezeigt, mit der die Filterhalter 22, 22a an der Relaiseinheit befestigt werden können. Dies ist lediglich eine von vielen möglichen Ausführungsformen, denkbar sind ebenso Rasten, Klemmungen oder Verriegelungen.

Ebenso wird die eingesetzte Strahlteilerhalterung 13 vereinfacht dargestellt. Diese umfasst ein vorteilhaft ein Abdeckblech, welches die Relaiseinheit 2 vor Lichteintritt an dieser Stelle schützt. Beispielhaft ist hier vereinfacht eine Verschraubung gezeigt, mit der die Strahlteilerhalterung 13 an der Relaiseinheit 2 befestigt wird. Dies ist lediglich eine von vielen möglichen Ausführungsformen, denkbar sind ebenso Rasten, Klemmungen oder Verriegelungen.

**Fig. 6** zeigt in vereinfachter schematischer Darstellung eine Ausführungsform eines erfindungsgemäßen Strahlteilersystems 1 mit zugeordneter Beleuchtungseinrichtung 23, 23a, 23b, 24, 24a, 24b. Ein Darsteller 27 wird von einer Lichtquelle 23 beleuchtet, welche ausschließlich Licht des sichtbaren Spektrums emittiert oder mittels eines Filters 24 auf das Spektrum des sichtbaren Lichts gefiltert ist, beispielsweise mittels eines Kurzpassfilters, der eine Grenzwellenlänge im Bereich von 700 nm bis 780 nm aufweist.

Der Hintergrund 29 wird von einer Lichtquelle 23a beleuchtet, welche ausschließlich infrarotes oder nahinfrarotes Licht emittiert oder mittels eines Filters 24a auf das Spektrum des infraroten Lichts gefiltert ist, beispielsweise mittels eines Langpassfilters, der eine Grenzwellenlänge im Bereich von 700 nm bis 780 nm aufweist.

Die Kameras 12, 12a sind durch korrespondierende Lang- und Kurzpassfilter mit einer Grenzwellenlänge im Bereich von 700 nm bis 780 nm ebenfalls so ausgelegt, dass die eine Kamera ausschließlich sichtbares Licht und die andere Kamera ausschließlich infrarotes Licht aufzeichnet. Die von der Lichtquelle 23 emittierte Strahlung ist somit für die auf infrarotes Licht empfindliche Kamera nicht sichtbar, während die von der Lichtquelle 23a emittierte Strahlung für die auf sichtbares Licht empfindliche Kamera nicht sichtbar ist. Der durch das infrarote Licht angestrahlte Hintergrund 29 lässt sich dadurch als reiner Maskenkanal verwenden, beispielsweise um später den Darsteller 27 mit einem neuen Hintergrund zu kombinieren.

In einem weiteren Anwendungsbeispiel emittiert eine weiche, diffuse Flächenleute 23 mittels eines Filters 24 oder durch ihre Leuchteigenschaft ausschließlich sichtbares Licht auf einen Darsteller 27 oder eine Szene. Eine weitere, punktförmige, harte Lichtquelle 23b emittiert durch ihre Leuchteigenschaft oder durch einen Filter 24b ausschließlich infrarotes oder nahinfrarotes Licht auf den Darsteller 27. Die Kameras 12, 12a sind durch entsprechende und bereits erläuterte Filterungen entweder nur für sichtbares oder nur für infrarotes Licht empfindlich. Somit zeichnet eine der Kameras 12, 12a eine weiche, diffus beleuchtet Abbildung des Darstellers 27 auf, während die andere einen harten Lichtverlauf als eigenen Maskenkanal im Infrarotspektrum aufzeichnet, der keine Anteile des sichtbaren Lichts enthält. Wird die Aufzeichnung des diffus beleuchteten Kanals des sichtbaren Lichts in der Bildbearbeitung in zwei Lichtstimmungen aufgeteilt, wobei eine der einer dunklen Schattenpartie entspricht und die andere der eines hellen, grellen Sonnenlichts, so lassen sich mit dem Maskensignal der Infrarotaufnahme diese beiden Lichtstimmungen zu einem Eindruck kombinieren, in der der Darsteller 27 in einem grellen Sonnenlicht steht.

Eine Weiterbildung der zugeordneten Beleuchtungseinrichtung lässt sich erreichen, wenn die Kameras 12, 12a phasenversetzt zueinander aufzeichnen und die Lichtquellen 23, 23a, 23b zu den Kameras 12, 12a synchronisiert sind und ein pulsierendes Licht emittieren. Die Belichtung der ersten Kamera 12 erfolgt hierbei in einem Zeitfenster, in dem die andere Kamera 12a nicht aufzeichnet und umgekehrt. Die Lichtquellen 23, 23a, 23b emittieren das Licht als periodische Lichtpulse, die so synchronisiert ist, dass die Lichtquellen ausschließlich während jeder Belichtungsphase der ersten Kamera 12 oder ausschließlich während jeder Belichtungsphase der zweiten Kamera 12a ihr Licht aussenden. Es lassen sich so Bildsequenzen mit völlig unterschiedlichen Beleuchtungssituationen aufzeichnen und später beliebig kombinieren, mischen oder als Überblendung realisieren.

Die hier vorgestellten Anwendungsbeispiele stehen nur exemplarisch für eine Vielzahl von Anwendungen des erfindungsgemäßen Strahlteilersystems 1 und einer zugeordneten Beleuchtungseinrichtung. Beispielsweise können eine oder mehrere der Lichtquellen 23, 23a, 23b durch polarisierende Filter 24, 24a, 24b polarisiert werden. Wird in einem der Abbildungspfade der Kameras 12, 12a ebenfalls ein (hier nicht gezeigter) Polarisationsfilter platziert, welcher eine um 90° verdrehte Polarisationsrichtung aufweist, so zeichnet diese Kamera eine kreuzpolarisierte Version der Abbildung auf, in welcher die Glanzlichter ausgelöscht sind.

### Bezugszeichenliste

- 1: Strahlteilersystem
- 2: Relaiseinheit
- 3: Aufnahmeobjektiv
- 4: Luftbild
- 5: Strahlung
- 6: erste Relaisoptik
- 7, 7a: Strahlteilerelement
- 8, 8a, 8b: zweite Relaisoptik
- 9: Abbildungsstrahlengang
- 10: erster Abbildungspfad
- 10a: zweiter Abbildungspfad
- 10b: dritter Abbildungspfad
- 11, 11a, 11b: Sensor
- 12, 12a, 12b: Kamera
- 13: Strahlteilerhalterung
- 14, 14a, 14b: objektivseitiger Mount
- 15, 15a, 15b: kameraseitiger Mount
- 16, 16a: Fokussiereinrichtung
- 18, 18a: Bildkreis
- 19: vertikale Verschiebevorrichtung
- 20: horizontale Verschiebevorrichtung
- 21, 21a, 21b: Filter
- 22, 22a: Filterhalter
- 23, 23a, 23b: Lichtquelle
- 24, 24a, 24b: Lichtquellenfilter
- 25: Syncgenerator
- 26: horizontal orientiertes Bildfenster
- 26a: vertikaler Cutout aus horizontalem Bildfenster
- 27, 27a: Darsteller
- 28: vertikal orientiertes Bildfenster
- 28a: verschobenes, vertikal orientiertes Bildfenster
- 28b: verschobenes und verkleinertes, vertikal orientiertes Bildfenster
- 29: Hintergrund

## Patentansprüche

1. Strahlteilersystem (1), bestehend aus einem Aufnahmeobjektiv (3), wenigstens zwei Kameras (12, 12') sowie einer Relaiseinheit (2) mit wenigstens einem Strahlteilerelement (7), einer ersten Relaisoptik (6) und wenigstens zwei zweiten Relaisoptiken (8, 8a), **dadurch gekennzeichnet, dass**
das Aufnahmeobjektiv (3) ein reelles Luftbild (4) zur Verfügung stellt, das durch die erste Relaisoptik (6) abgebildet wird, wobei das wenigstens eine Strahlteilerelement (7) den Abbildungsstrahlengang (9) der ersten Relaisoptik (6) in wenigstens zwei Abbildungspfade (10,10a) aufteilt, und die wenigstens zwei zweiten Relaisoptiken (8, 8a) in den wenigstens zwei zweiten Abbildungspfaden (10, 10a) das Luftbild (4) jeweils auf einen Sensor (11, 11a) der wenigstens zwei Kameras (12, 12a) abbilden, wobei die Brennweite der ersten Relaisoptik (6) sich von den Brennweiten der wenigstens zwei zweiten Relaisoptiken (8, 8a) nicht um mehr als 10% unterscheidet und das Strahlteilersystem (1) ferner eine Einrichtung umfasst, die dazu ausgebildet ist, das abzubildende Bild (4) in wenigstens einem der wenigstens zwei Abbildungspfade (10, 10a) wahlweise zu modifizieren.

2. Strahlteilersystem (1) nach Anspruch 1, **dadurch gekennzeichnet, dass** das Strahlteilerelement (7) in einer vorgegebenen Position im Abbildungsstrahlengang (9) lösbar in der Relaiseinheit (2) montiert ist.

3. Strahlteilersystem (1) nach Anspruch 1 oder 2, **dadurch gekennzeichnet, dass** das Strahlteilerelement (7) den Abbildungsstrahlengang (9) der ersten Relaisoptik (6) entsprechend einem vorgegebenen Intensitätsverhältnis und/oder entsprechend der Polarisation des Abbildungsstrahls und/oder eines gewünschten Spektralbereiches des Abbildungsstrahls aufteilt.

4. Strahlteilersystem (1) nach einem der vorhergehenden Ansprüche, **dadurch gekennzeichnet, dass** die Einrichtung wenigstens einen Filter (21, 21a) umfasst, der hinter dem Strahlteilerelement (7) in wenigstens einem der beiden Abbildungspfade (10, 10a) angeordnet ist.

5. Strahlteilersystem (1) nach Anspruch 4, **dadurch gekennzeichnet, dass** der wenigstens eine Filter (21, 21a) zwischen dem Strahlteilerelement (7) und der wenigstens einen zweiten Relaisoptik (8, 8a) wechselbar angeordnet ist, und/oder der wenigstens eine Filter (21, 21a) drehbar um die optische Achse des Abbildungspfades gelagert ist und seine Drehstellung von außen einstellbar ist.

6. Strahlteilersystem (1) nach einem der Ansprüche 4 oder 5, **dadurch gekennzeichnet, dass** der wenigstens eine Filter (21, 21a) ein Graufilter, ein Polarisationsfilter und/oder ein Langpass- oder Kurzpassfilter ist, wobei optional die Grenzwellenlänge des Lang- oder Kurzpassfilters im Bereich von 700 nm - 780 nm liegt.

7. Strahlteilersystem (1) nach einem der vorhergehenden Ansprüche, **dadurch gekennzeichnet, dass** die erste Relaisoptik (6) und die wenigstens zwei zweiten Relaisoptiken (8, 8a) dazu ausgebildet sind, einen Bildkreis von mindestens 32 mm Durchmesser zu übertragen.

8. Strahlteilersystem (1) nach einem der vorhergehenden Ansprüche, **dadurch gekennzeichnet, dass** die erste Relaisoptik (6) und die wenigstens zwei zweiten Relaisoptiken (8, 8a) dazu ausgebildet sind, eine Lichtstärke von wenigstens einer Blende 2 zu übertragen.

9. Strahlteilersystem (1) nach einem der vorhergehenden Ansprüche, **dadurch gekennzeichnet, dass** wenigstens eine der zweiten Relaisoptiken (8, 8a) entlang der optischen Achse verschiebbar und fixierbar ist, um den Fokus dieser Optik auf die Sensorebene (11, 11a) abzustimmen.

10. Strahlteilersystem (1) nach einem der vorhergehenden Ansprüche, **dadurch gekennzeichnet, dass** das Aufnahmeobjektiv (3) und/oder wenigstens eine der Kameras (12, 12a) trennbar mit der Relaiseinheit (2) verbunden ist, wobei optional das Aufnahmeobjektiv (3) und/oder wenigstens eine der Kameras (12, 12a) mittels eines PL-Mounts, eines LPL-Mounts oder eines anderen Standard-Mounts mit der Relaiseinheit (2) verbunden ist.

11. Strahlteilersystem (1) nach einem der vorhergehenden Ansprüche, **dadurch gekennzeichnet, dass** die Sensoren (11, 11a) der Kameras (12, 12a) zeitlich zueinander synchronisiert sind.

12. Strahlteilersystem (1) nach einem der vorhergehenden Ansprüche, **dadurch gekennzeichnet, dass** das Strahlteilersystem (1) eine Verschiebevorrichtung (19, 20) aufweist, die dazu ausgebildet ist, wenigstens eine der Kameras (12, 12a) parallel zu seiner Sensorebene in horizontaler und/oder vertikaler Richtung zu verschieben.

13. Strahlteilersystem (1) nach einem der vorhergehenden Ansprüche, **dadurch gekennzeichnet, dass** das Strahlteilersystem (1) eine Vorrichtung aufweist, die dazu ausgebildet ist, wenigstens eine der Kameras (12, 12a) bezüglich einer vorgegebenen Ausgangsstellung um 90° um die optische Achse zu rotieren.

14. Strahlteilersystem (1) nach einem der vorhergehenden Ansprüche, **dadurch gekennzeichnet, dass** die Sensoren (11, 11a) der Kameras (12, 12a) so eingestellt sind, dass sie die gleichen Bildausschnitte aufzeichnen und/oder die gleichen Belichtungszeiten aufweisen.

15. Strahlteilersystem (1) nach einem der vorhergehenden Ansprüche, **dadurch gekennzeichnet, dass** das Strahlteilersystem (1) ferner eine Beleuchtungseinrichtung umfasst, die dazu ausgelegt ist, Licht einer vorgegebenen Polarisationsrichtung und/oder Licht eines bestimmten Spektralbereiches und/oder pulsierendes Licht, welches zur Bildrate wenigstens einer Kamera synchronisiert ist, zu emittieren.
